Europäisches Patentamt

European Patent Office

Office européen des brevets

(19)

(11) **EP 1 477 995 A1**

## (12) EUROPEAN PATENT APPLICATION
published in accordance with Art. 158(3) EPC

(43) Date of publication:
**17.11.2004 Bulletin 2004/47**

(21) Application number: **02797019.3**

(22) Date of filing: **26.12.2002**

(51) Int Cl.7: **H01F 7/08**, H01F 7/122,
H01F 7/14, H01F 7/16

(86) International application number:
**PCT/UA2002/000068**

(87) International publication number:
**WO 2003/060932 (24.07.2003 Gazette 2003/30)**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(30) Priority: **28.12.2001 US 19405
29.12.2001 UA 01129236
11.07.2002 US 192523**

(71) Applicant: **SPB United, Inc.
Passaic, N.J. 07055 (US)**

(72) Inventor: **Babich, Nikolai Sergeevich
Kiev, 02091 (UA)**

(74) Representative: **Jones, Graham H.
Graham Jones & Company
Blackheath
77 Beaconsfield Road
London SE3 7LG (GB)**

(54) **METHOD FOR CONTROLLING FLUX OF ELECTROMAGNET AND AN ELECTROMAGNET
FOR CARRYING OUT SAID METHOD (VARIANTS)**

(57)     The group of inventions relates to magnetic systems, in particular to a method for controlling the flux of electromagnet and to the structural design of an electromagnet which is used for carrying out said method. The inventive structures of the electromagnet can be mainly used for electromechanical actuating devices and comprise a magnetic coil provided with a composite magnetic core made at least partially of hard-magnetic material and provided at least with one air gap. The novelty of the invention lies in that the composite magnetic core is embodied in such a way that it has at least two stable magnetic states, said magnetic core has each said state (the air gap being minimized) as a result of the action of the control current pulses supplied to the magnetic coil winding and having different (opposite) polarities, respectively. The specified values of the magnetic flux correspond to the stable states of the magnetic core of the electromagnet when in it is devoid of electric current in the magnetic coil winding thereof. Said invention makes it possible to substantially increase the efficiency of electromagnet by increasing the attractive and holding forces thereof, improving the mass and dimensional characteristics and the operational safety thereof, and also by energy saving and extending the functional capabilities of said structural design of the inventive electromagnet which uses the inventive method for controlling the magnetic flux.

Fig. 5

EP 1 477 995 A1

**Description**

The group of inventions relates to magnetic systems, and in particular to a method of controlling a magnetic flux of an electromagnet as well as to constructions of the electromagnet carrying out said method.

The proposed group of inventions can be used preferably in executing devices of electromechanical field, in particular in magnetic starters, contactors and vacuum switches, locking devices for blocking locks of safe boxes, automobiles, doors, and the like devices for the purpose of preventing unauthorized penetration, and also in overrunning couplings, connecting couplings, braking mechanisms and other constructions.

In said constructions an electromagnet which performs the function of an electromechanical drive includes a magnetizing coil on a magnetic guide of ferromagnetic material, at least with one air gap. When voltage is supplied to a winding of the magnetizing coil of ferromagnetic material of the magnetic guide, a magnetic flux which is excited in the magnetic guide attracts a movable core. When the voltage is removed from the winding of the magnetizing coil, the magnetic flux disappears, and as a result of it a force which attracts the core disappears, and under the action of a return spring the core returns to its initial position.

A method is known for controlling a magnetic flux of an electromagnetic with a relay pulling characteristic which is determined by stable levels of values of a magnetic flux in a magnetic guide, composed at least partially of a magnetically hard material and with at least one air gap, by supplying controlling pulses of electric current into a winding of the magnetizing coil with a possibility of obtaining an attracting force of a movable part of the magnetic guide-a core of the electromagnet, see for example DE 19639545 A1 of 12/18/1997, applicant ICON, AG PRAZISIONSTECINIC (1).

The known method is not sufficiently efficient. This is connected with the fact that during controlling of the magnetic flux in the magnetic guide, in accordance with the method, a closing of a magnetic circuit of the magnetic guide of the electromagnet is not provided, and a fixation of its movable part-a core in extreme positions is carried out in a mechanical way, or in other words with the use of mechanical means, and in particular by means of the use of balls which are spring-biased by a ring and enter corresponding ring grooves in end positions of the movable part of the magnetic guide of the electromagnet. The result of this is a relatively insufficient exploitation reliability due to increased mechanical wear, which contributes to an increase of probability of failures in the operation and reduction of service life before failure, limits the value of pulling and attracting force.

Moreover, the known method does not guarantee a minimization of the air gap and correspondingly, closing of the magnetic circuit of the magnetic guide.

The closest, in accordance with a technical substance and the achieved result, to the claimed method is a method of controlling a magnetic flux of an electromagnet with a relay pulling characteristic, determined by stable levels of values of a magnetic flux in a magnetic guide, formed at least partially of a magnetically hard material and with at least one air gap, by means of supply of controlling pulses of electrical current in a winding of a magnetizing coil with a possibility of obtaining an attracting force of a movable part of a magnetic guide-core of electromagnet, see for example European patent EP 0794540 A1 of 09/10/1997, applicant HARTING KGaA CNJK, TW 2 CNIJRB, prototype (2).

In the known method for controlling a magnetic flux of an electromagnet, partially the above mentioned disadvantages are eliminated, because it provides a higher exploitation reliability. However, the efficiency of the known method continues to remain relatively insufficient due to a relatively insufficient functional possibilities of the electromagnet. This is connected with the fact that the known method also does not provide a closing of a magnetic circuit of the magnetic guide of the electromagnet due to a constant presence of an air gap in a magnetic circuit of the electromagnet. Moreover, the known method can not provide a possibility of remagnetization, demagnetization of the magnetically hard material of the magnetic guide or another action on it in the case of changing of the magnetic flux in the magnetic guide, created by a magnetizing coil.

An electromagnet of an actuating device is known, preferably of a magnetic drive, which is formed as at least one magnetizing coil on a composite magnetic guide with an immovable stator, a movable core and at least one air gap, wherein at least a part of the magnetic guide is formed as an insert of a magnetically hard material with a possibility of controlling a magnetic flux in the magnetic guide by its remagnetization by supply of short-term pulses of current of different polarity into a winding of the magnetizing coil, see for example DE 19639545 A1 of 12/18/1997, applicant ICON, AG PRAZISIONSTECINIC (3).

The known electromagnet does not provide a closed metallic construction, and thereby its sufficiency is reduced due to sufficiently high magnetic dispersing fluxes and also due to significant losses of a magnetic energy in the air gap. Moreover, the construction of the known electromagnet does not have a property of "magnetic memory" (here and later on the term "magnetic memory" is used for explanation of an ability of a composite magnetic guide to accumulate a magnetic energy at the level of a magnetic flux, created by a magnetizing coil).

Also known is an electromagnet of an electromagnetic drive of an actuating device, preferably a magnetic drive, which is formed as at least one magnetizing coil on a composite magnetic guide with an immovable stator, a movable core and at least one air gap, wherein at least a part of the magnetic guide is formed as an insert of a magnetically hard material with a possibility of controlling a magnetic flux in the magnetic guide by its remagnetization due to the supply of short term pulses of current of different polarities into a winding of the magnetizing coil, see for example European patent EP 0794540 A1 of 09.10.1997, applicant HARTING, KGaA CNJK, TW 2 CNIJGRB (4).

In the known construction of this electromagnet a part of the core is composed of a magnetically hard material. However, this composite magnetic guide of the known electromagnet does not provide a closed circuit of the magnetic guide due to the presence of a sliding bearing between the core and a cover, and also the presence because of this of a permanent air gap in the magnetic guide. In addition, the efficiency of the known electromagnet is insufficient because the insert of permanent magnet used in its magnetic guide is located with a strict orientation of its magnetic poles, and in particular "S" and "N", which causes "adherence" of the core to a place on a bottom of the cylinder. Because of this, and also because of the presence, in addition to this, of a parallel branch of the magnetic guide of a magnetically soft material which passes through the middle of the permanent magnet-a magnetic insert of a ring shape, the magnetically hard material of its magnetic guide does not remagnetize, or in other words it is not demagnetized, and as a result of this it therefore is not subjected to any controlling action on the magnetically hard material from the side of the magnetizing coil, since the magnetic flux created by the magnetizing coil passes in the magnetic guide along a path of the least magnetic resistance, and in particular along a path of the maximum magnetic conductivity in a parallel branch of the magnetically soft material. As a result of this, the magnetic guide of the known electromagnet does not have the property of "zeroing" of the magnetic flux in the magnetic guide (here and later the term "zeroing" is used for the cases when the magnetic flux is equal to zero, or for the cases $\phi = 0$). In other words, when the current pulse in the winding of the magnetizing coil is absent, the value of the magnetic flux in the composite magnetic guide of the known electromagnet is not sufficient for providing a necessary force of attraction of the movable core, since the force of attraction in the known electromagnet corresponds to a force created by a simple bipolar permanent magnet. A release of the core from the bottom, or in other words a return of the core, is provided by creating with a magnetizing coil of a magnetic flux with a reverse, or in other words opposite, direction, which compensates the magnetic flux constantly created by the magnetically hard insert. Therefore the known electromagnet has such disadvantages as a relatively weak holding force, an insufficient reliability during exploitation, and an insufficient functionality.

The closest, in accordance with a technical substance and an achieved result, to the claimed device is a known electromagnet of an electromagnetic device of an executing device preferably a magnetic drive, which is formed as at least one magnetizing coil on a composite magnetic guide with an immovable stator, a movable core and at least one air gap, wherein at least a part of the magnetic guide is formed as an insert of a magnetically hard material with a possibility of controlling a magnetic flux in the magnetic guide by its remagnetization due to the supply of short time current pulses of different polarity into the winding of the magnetizing coil, see for example international patent application PCT/UA00/0005 H01F 7/16, 7/124 E05 B 47/02, of 02/03/2000, applicant BABICH, N. S.-prototype (5).

In this construction the above mentioned disadvantages are partially eliminated. However, its efficiency is insufficient since the insert of the magnetically hard material is located on a movable part of the magnetic guide, or in other words on the core. Because of this, during the displacement of the core with the insert of the magnetically hard material relative to the convolutions of the winding of the magnetizing coil it induces an electrodynamic force of a mutual induction in the winding, which creates in the magnetic guide of the electromagnet a magnetic flux directed toward the main flux or in other words to the controlling flux generated by the same winding. In this case the vectors of said fluxes have practically equal magnitudes, though they are shifted in phase. Due to this, the resulting magnetical moving force (later in the text MMF) and an attracting force created by the magnetic insert is reduced. Therefore, the exploitation efficiency of the known construction of the electromagnet is practically not high. Moreover, a disadvantage of the known construction is that said MMF of mutual induction does not give a possibility to provide a frequency of switching off of the magnetic system of the electromagnet, since with switching off and return of the core to an initial position, the insert of the magnetically hard material moves relative to the convolutions of the currentless magnetizing coil, induces electric current in the winding of the coil and is magnetized itself, or in other words is not completely "zeroed", which can cause an unauthorized attraction of the core.

The basis of this invetion is an objective to increase exploitation efficiency by means of reducing of energy consumption, by means of increasing of a reliability due to reduction of a number of failures and increase service life before failure, by means of improving of mass-size parameters, and also by means of increase of functionality of the electromagnet or in other words expansion of its functional possibilities.

This objective is solved in the invention in that, in the known method of controlling a magnetic flux of an electromagnet with a relay pulling characteristic, determined by stable levels of values of a magnetic flux in a composite magnetic guide, which at least partially is composed of a magnetically hard material and at least partially has one air gap, by means of supply of controlling pulses of electric current into a winding of a magnetizing coil with a possibility of obtaining an attractive force of a movable part of a magnetic guide of the electromagnet, in accordance with the present invention, a magnetically hard material is used which has a property to maintain at least two stable conditions of magnetization, and as controlling pulses of electric current, in the magnetizing winding of a composite magnetic guide of the electromagnet at least two short term pulses are supplied, wherein during the supply of a first pulse a closing of the magnetic circuit of the magnetic guide is provided and a minimization of its magnetic resistance due to minimization of air gap ofthe magnetic guide with a subsequent maximization of the magnetic flux in the magnetic guide and its transition to one of the stable conditions, characterized by a maximal value of the magnetic flux in the magnetic guide, which corresponds to an energy of controlling pulse action, with a possibility of staying of the composed magnetic guide of the electromagnet in this stable condition and by providing of its holding force until a supply of another controlling pulse of electric current, whose energy characteristic in its magnitude is sufficient for transfer of the magnetic guide into another stable condition which is characterized by another magnitude of the magnetic flux corresponding to it, and another magnitude of a holding force corresponding to it.

The set objective is also solved in that the supply of the first controlling pulse of current into the winding of the magnetizing coil with a subsequent maximization of the magnetic flux in the composite magnetic guide is performed till minimization of the air gap, and also in that said supply of the first controlling parts of current into the winding of the magnetizing coil with subsequent maximization of the magnetic flux in the composite magnetic guide is performed after the minimization of the air gap.

The set objective in the invention is also solved in that the magnitude of the controlling magnetic flux in the composite magnetic guide of the electromagnet due to the first controlling pulse of electric current in the winding of the magnetizing of the electromagnet until closing of the magnetic circuit of the magnetic guide is provided at a level of its optimal value, which is necessary for generating an attracting force of the electromagnet, and it is maintained at a level til elimination of an air gap and magnetization of the material of the magnetic guide, and thereafter the electric pulse voltage is removed from the winding of the magnetizing coil, and the holding force of the electromagnet is provided due to a "magnetic memory" of the material of the composite magnetic guide with a possibility of obtaining a holding force, whose value is $F \leq 0.98 F_{max}$ wherein $F_{max}$- is a maximal value of the magnetic flux, generated by the winding of the magnetizing coil.

The set objective is also solved in that the required power of the controlling pulses with the possibility of providing a necessary force of the electromagnet is provided due to changing of parameters of controlling pulses, selected from a row composed of an amplitude of a pulse, its duration, its shape, their combinations.

Moreover, the objective of the invention is solved in that into the winding of the magnetizing coil a second controlling current pulse is supplied with a different energy characteristic when compared with a characteristic of the first controlling pulse, and a transfer of the magnetic guide is provided into one of other stable conditions-a third stable condition which is characterized by a corresponding magnitude of the magnetic flux in the composite magnetic guide and the corresponding magnitude of the holding force.

The objective is also in that a transfer of the magnetic guide is provided into a stable position which is characterized by a magnitude of the magnetic flux in the magnetic guide equal to zero, by supplying in the winding of the magnetizing coil a controlling current pulse which provides an intensity of the magnetic field in the magnetic guide, equal to coercitive force on a magnetizing curve and a corresponding magnitude of a holding force. During this process one of a stabile conditions of the composite magnetic guide is its initial condition which is characterized by a magnetic flux whose magnitude is equal to an initial value, and a value of a holding force which corresponds to it.

In this process the objective is also solved in that a power $P_2$ of the second controlling current pulse of an opposite polarity is provided 2:5 times less than the power of polarity $P_1$ of the first controlling pulse of a direct polarity and corresponds to $P_1=(2\div5) P_2$.

A duration $t_1$ of the first controlling pules of electric current of the direct polarity and correspondingly $t_2$ of the second controlling pulse of opposite polarity in the winding of the magnetizing coil and, correspondingly, a duration of pulses of the magnetic flux in the composite magnetic guide of the electromagnet is provided with such a magnitude which does not exceed the magnitude of the triple constant of time $\tau$ of the transitional process for a mass of the movable part of the magnetic guide or in other words $t_1 \leq 3 \tau$ and $t_2 \leq 3 \tau$, wherein $\tau$ is a time constant of the transitional process.

As a first controlling pulse of electric current, in a winding of the magnetizing coil a pulse can be supplied in form of sets of periodically modulated pulses, whose amplitude and/or enveloping line increase from a zero magnitude.

As a second controlling pulse of electric current, into the winding of magnetizing coil a pulse can be supplied in form of sets of periodically modulated pulses, whose amplitude and/or enveloping line reduce to a zero magnitude.

In addition, the objective of the invention is solved in that in the known electromagnet of an electromagnetic drive of an executing drive formed of at least one magnetizing coil on a composite magnetic guide with an immovable stator, a movable core and at least one air gap, wherein at least a part of the magnetic guide is formed as an insert of a magnetically hard material with a possibility of controlling a magnetic flux in the magnetic guide by its remagnetization due to a supply of short term current pulses of different polarity into a winding of the magnetizing coil, in accordance with the invention, the magnetic guide is formed with the possibility of closing a magnetic flux with minimization of an air gap due to a reciprocating linear displacement of the core, wherein the stator is formed as a flat base with at least one insert of a magnetically hard material fixed on it, and the core is formed as a steel plate with at least two rods fixed to it with their ends.

The electromagnet is additionally provided with current breakers into the winding of the coil, formed as normally closed contacts which are connected in series in a supplycircuit of the winding of the magnetizing coil and provided with a contact switch with an opening formed in a center of the base for passing of the contact switch, wherein the core is provided with a contact pusher which is fixed to the core and provided with a return spring.

For changing the duration of the current pulse in the winding of the magnetizing coil and turning on and/ or turning off of the electromagnet, the current breaker is additionally provided with normally closed contacts which are connected in series in the supply circuit of the winding of the magnetizing coil, while the contact switch is formed as a pusher with an upper end fixedly connected with the coil, wherein an opening forthe contact switch is provided in the center of the base.

The object of the invention is also solved in that the core is formed as a $\Pi$-shaped plate in a longitudinal cross-section, with side rods connected with their ends to the plate, wherein a stator is formed as a rod provided with an insert of a magnetically hard material.

The object is solved also in that the magnetic guide is formed as two plates, at least two rods, and at least one insert of a magnetically hard material, wherein the core is formed $\Pi$-shaped in a longltudinal cross-section as one plate and two rods, connected to it with their ends, while a stator is formed as a second plate with at least one insert of a magnetically hard material connected to it.

The objective of the invention is also solved in that the magnetic guide is formed as two plates, with one insert of a magnetically hard material connected to one of the plates, and at least three rods connected with their upper ends to the second free plate to form a core with a $\sqcup\!\sqcup$-shape in a longitudinal cross-section with a possibility of closing of the magnetic circuit with minimization of the air gap.

The objective is solved also in that the core is formed K-shaped in the longitudinal cross-section, wherein at least two magnetizing coils are coils are located preferably at the end rods of the core with the possibility of generating of coordinated magnetic fluxes in the central rod.

The objective is also solved in that the magnetic guide is additionally provided with magnetizing coils located on all rods of the core, and the winding of one of them is connected opposite to the other windings of magnetizing coils.

The objective is also solved in that the magnetic guide is additionally provided with a magnetizing coil located on the central rod, whose winding is connected opposite to the windings of the magnetizing coils located on the end rods.

Moreover, the objective of the invention is also solved in that in the known electromagnet of an electromagnetic guide of an executing device formed as at least one magnetizing coil on a composite magnetic drive with an immovable stator, a movable coil and at least one air gap, wherein at least a part of the magnetic guide is formed as an insert of a magnetically hard material with a possibility of controlling a magnetic flux in a magnetic guide by its remagnetization due to supply of short-term current pulses of different polarities into the winding of the magnetizing coil, in accordance with the present invention the magnetic guide is formed with the possibility of closing of the magnetic flux with minimization of the air gap due to a reciprocating displacement of the core along an arc, preferably a circle, and it has a housing formed as a disc, with at least one magnetic system located on it, in form of a segment, preferably circular in which a passage-slot is formed with a coaxially located along an arc of a circle, a magnetizing winding is located in the housing, and the core is located in the passage-slot and formed as a rod provided with a top and a reverse spring and formed with a shape of the slot with a possibility of a reciprocating displacement along the arc of the circle in it, wherein the insert of the magnetically hard material is located on a bottom of the passage-slot and fixed to its wall which is orthogonal to the direction of the displacement of the core and limits its displacement.

Moreover, the objective of the invention is solved in that in the above mentioned known electromagnet of electromagnetic drive of an executing device formed as at least one magnetizing coil on a composite magnetic guide with an immovable stator, a movable core and at least one air gap, wherein at least one part of the magnetic guide is formed as an insert of a magnetically hard material with a possibility of controlling a magnetic flux in the magnetic guide by a remagnetization of the magnetic guide due to the supply of two short term current pulses of equal polarities into the windings of the magnetizing coil, in accordance with the present invention the magnetic guide is formed with minimization of an air gap due to a reciprocating linear displacement of the core relative to the stator, the stator is formed as a hollow cup, preferably a cylindrical cup, which is provided with at least one rod, at least part of which is composed of a magnetically hard material and which is fixed with its one end to a bottom of the cup, while its another end is formed in one plane with an end of the cylinder, wherein at least one of the magnetizing coils surrounds the rod, and the core is located outside of the cup and formed as a plate with a possibility of closing of a magnetic circuit with minimization of an air gap due to the displacement of the core relative to the stator.

As the movable stator, structural elements of metal scrap or load can be utilized.

The objective of the invention is also solved in that in the known electric magnet of an electromagnetic drive of an executing device formed as at least one magnetizing coil on a composite magnetic guide with an immovable stator, a movable core, and at least one air gap, wherein at least a part of the magnetic guide is formed as an insert of a magnetically hard material with a possibility of controlling a magnetic flux in the magnetic guide by remagnetization of the magnetic guide due to supply of short term current pulses of different polarities into the magnetizing coil, in accordance with the present invention the magnetic guide is formed with a possibility of closing a magnetic flux with minimization of the air gap due to a rotatable displacement of the core relative to the stator, wherein the stator of the magnetic guide is formed as a cup provided with at least one rod, whose part is composed of a magnetically hard material and which with its one end is connected to a bottom of the cup, while its another end is formed in one plane with an end of the cylinder, wherein at least one magnetizing coil is surrounded by a rod, the core is located outside of the cup and formed as a plate with a possibility of closing the cup with a cover, and a volume-closed magnetically conductive construction of "cup-cover" is formed with the possibility of changing a moment of a friction force between the core and the stator.

The objective of the invention is also solved in that in the known electromagnet of an electromagnetic drive of an executingjevice formed as at least one magnetizing coil on a composite magnetic guide with an immovable stator, a movable core, and at least one air gap, wherein at least a part of the magnetic guide is formed as an insert of a magnetically hard material a the possibility of controlling a magnetic flux in the magnetic guide by remagnetization of the magnetic guide due to supply of short-term current pulses having different polarities into the winding of the magnetizing coil, in accordance with the present invention the magnetic guide is formed with a possibility of closing the magnetic flux with minimization of the air gap due to a reciprocating linear and/or rotary displacement of the core relative to the stator, wherein the stator of the magnetic guide is formed as a cup with a magnetizing core located in its cavity and with a bottom formed as an insert of a magnetically hard material, while the core is formed as a cover of the cup connected to an end of a rod coaxially located at the inner cavity of the coil, wherein the magnetic guide is formed with a possibility of closing of the cup with the cover with a simultaneous touching by the free end of the rod with a bottom of the cup, with formation of a volume-closed magnetically conductive construction "cup-cover-rod-bottom of the cup".

The objective of the invention is also solved in that the bottom of the cup formed of a magnetically hard material with a layer of a magnetically soft material from an outer side of the cup with a possibility of increasing an area of a cross-section of the bottom of the cup perpendicular to the direction of the magnetic guide.

The objective is also solved in that the bottom of the cup at least partially is formed as an insert of a magnetically soft material with a possibility of changing a friction force of the core relative to the stator.

Finally, the objective of the invention is solved in that at least partially the walls of the cup are formed of a magnetically hard material, and the core is formed with a possibility of a linear reciprocating displacement with the possibility of changing of a moment of a friction force relative to the stator.

This execution of the invention provides an increase of exploitation efficiency due to reduction of energy expenses, due to increase of reliability because of reduction of failures and increase of service life before failure, because of improvement of mass-size parameters, and also by increase of functionality of the electromagnet, or in other words the expansion of its functional possibilities.

*BRIEF DESCRIPTION OF THE DRAWINGS*

Hereinbelow the claimed group of inventions is illustrated by figures of the drawings, in which schematically there are shown:

Figure 1 - an equivalent diagram of a magnetic circuit of a composite magnetic guide of a claimed electromagnet;

Figure 2 - time diagrams of parameters which characterize processes in the claimed electromagnet with a composite magnetic guide;

Figure 3 - schematic curves of magnetization and energy expenses for magnetization of magnetically hard materials of composite magnetic guide of the claimed electromagnet, and in particular for alloys UN 13DK24 with no 31, UN 15 DK25BA with no. 32, UNDK35T5BA with no. 33, 28 CA250 (FeBa) with no. 34, KSP37A (SmCo) with number 35 and Nd-FeB with no. 36;

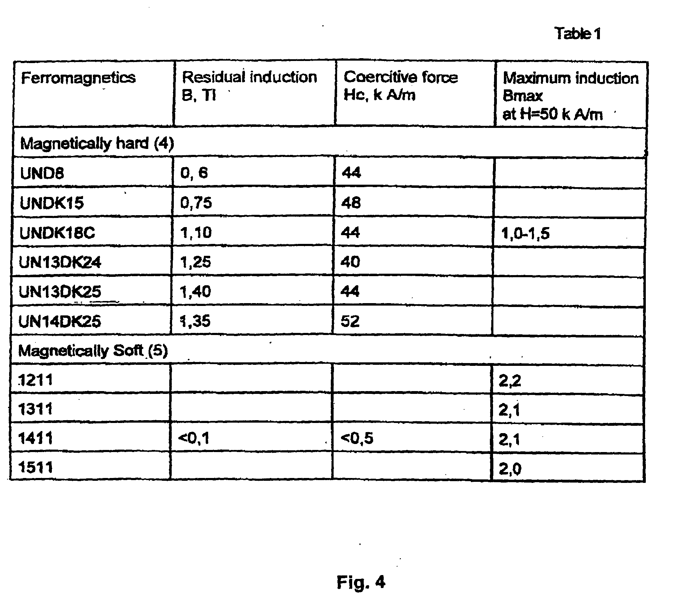

Figure 4 - a table of electromagnetic properties of the magnetically hard and magnetically soft materials of the composite magnetic guide;

Figures 5-8 - an electromagnet with a multi-rod composite magnetic guide and a linear reciprocating displacement of a core, a front view, a longitudinal cross-section (Figures 5, 7 and 8) and correspondingly a top view (Figure 6);

Figures 9 and 10-an electromagnet with a composite magnetic guide and reciprocating turning displacement of the core, a front view (a longitudinal cross-section) and correspondingly a top view (a transverse cross-section;

Figures 11 and 12 - an electromagnet with a multi-rod composite magnetic drive and a reciprocating linear and/or reciprocating rotary displacement of the core, a front view, and correspondingly a top view;

Figures 13-16 - an electromagnet with a single rod composite magnetic guide and a reciprocating linear and/or reciprocating rotary displacement of the core, a front view, a longitudinal cross-section;

Figures 17-21 - a schematic illustration of processes which take place in a domain structure of a magnetically hard material;

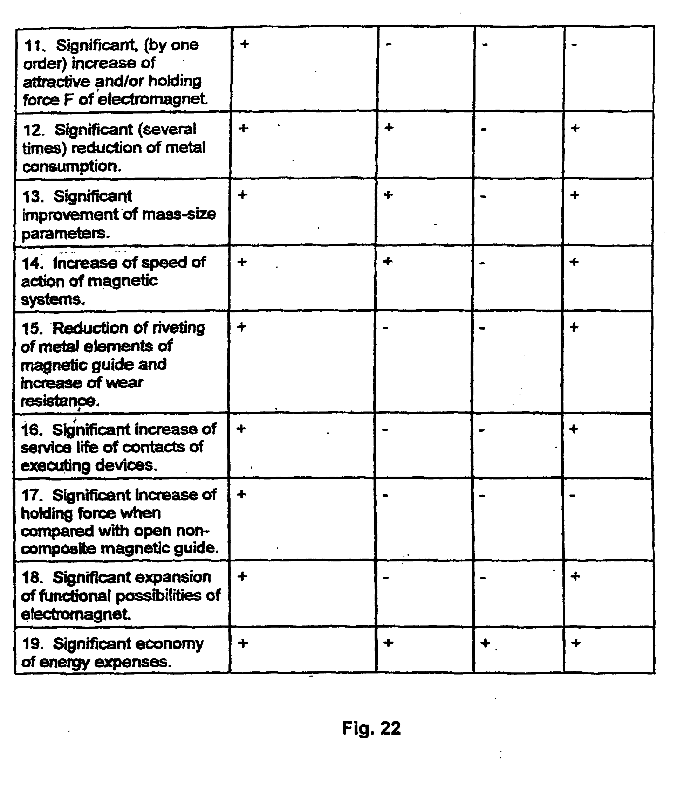

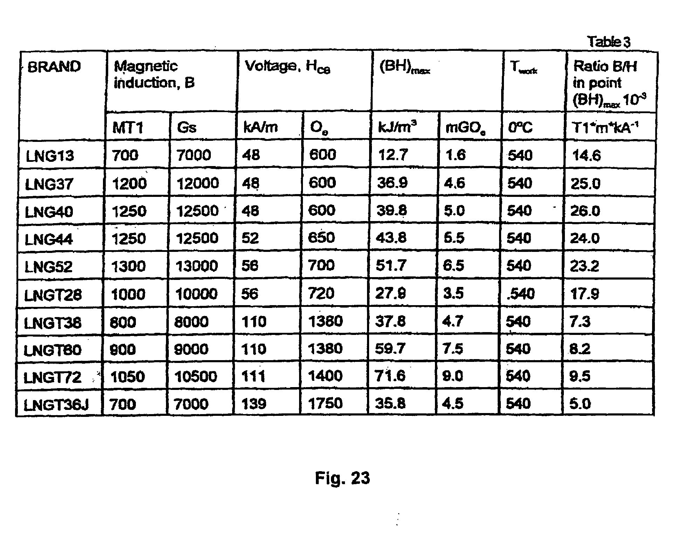

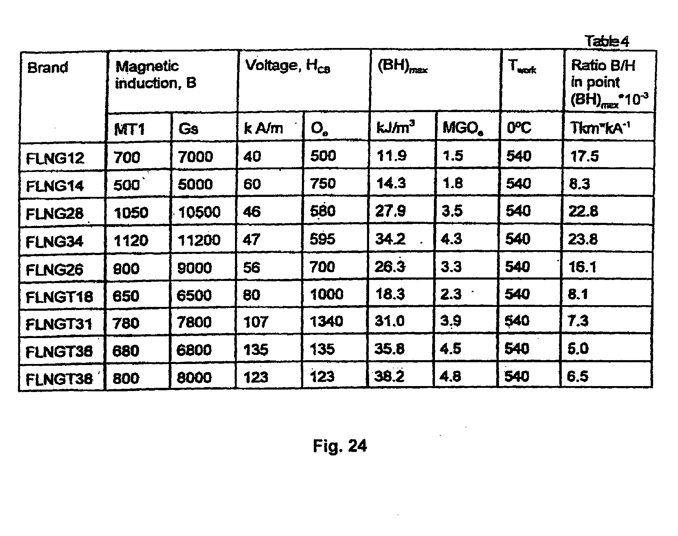

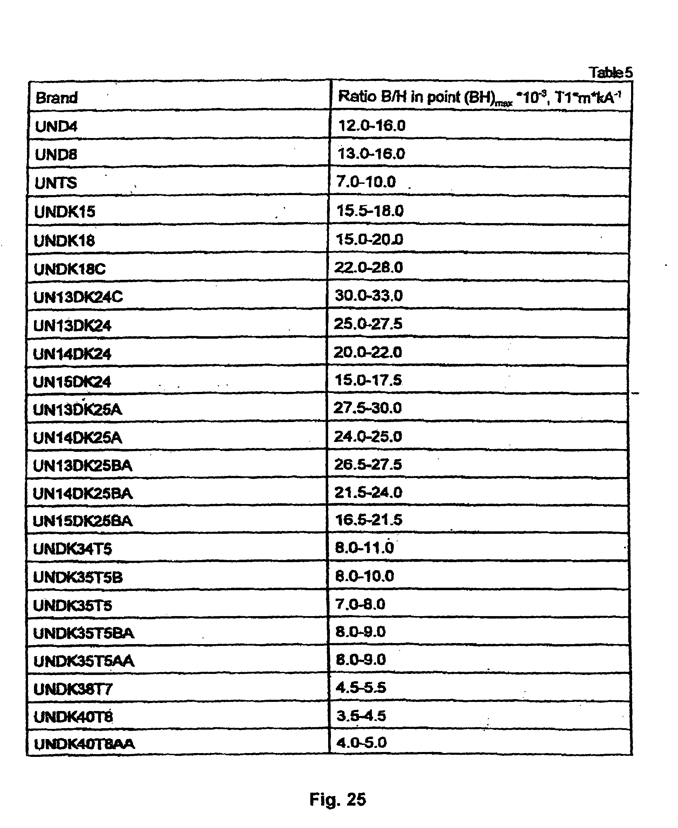

Figures 22-25 - are tables of properties of sintered and cast magnetically hard materials in accordance with a Western European standard and its correspondence to a standard accepted in pre-Soviet states, including Ukraine.

An important peculiarity of the claimed group of invention is that for its implementation, the following conditions must be satisfied:

1. An air gap must be minimized, which on one hand means that the dispersion field is minimized, and on the hand means that the magnetic circuit is formed closed, is composed of separate parts of a ferromagnetic connected in series with one another with a practically minimized total resistance of an equivalent magnetic circuit, so that a full magnetic flux passes through each of the parts of the equivalent magnetic circuit.

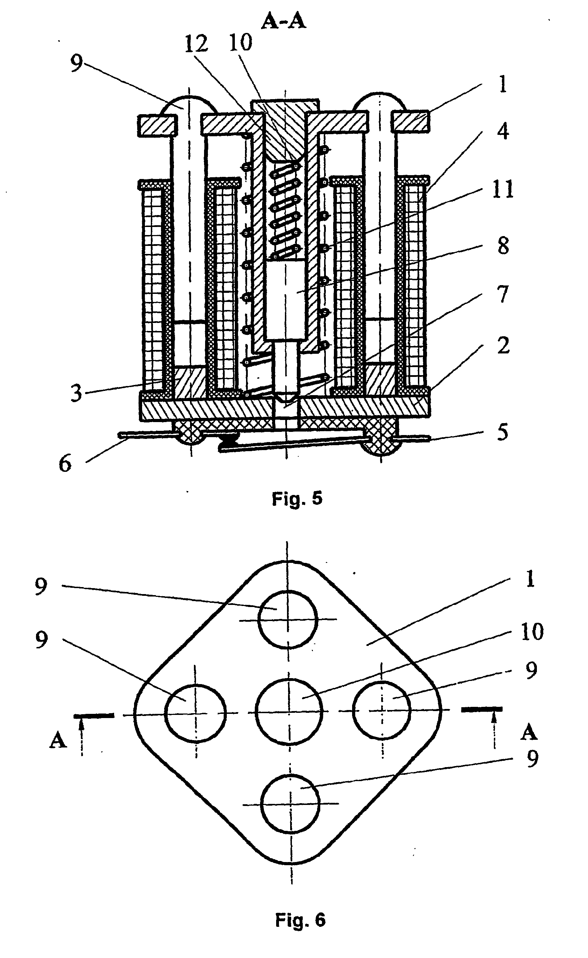

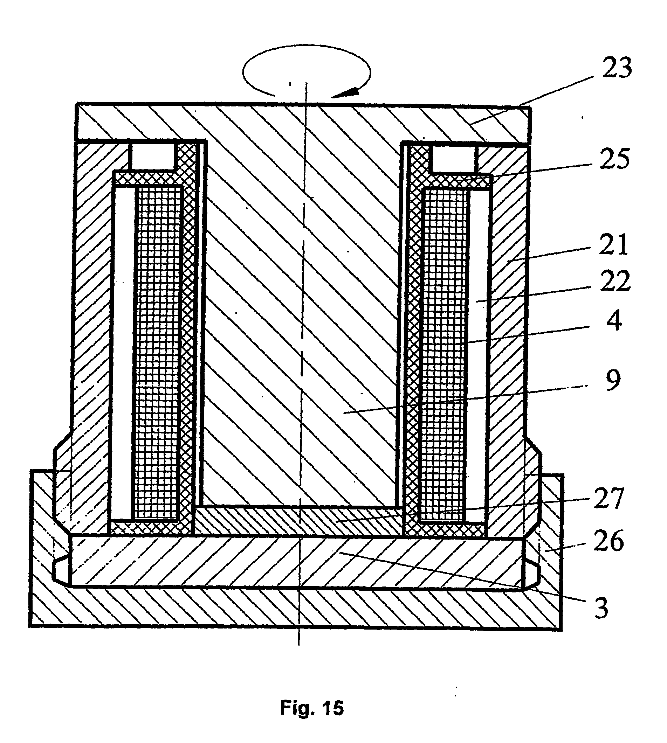

2. A ferromagnetic of the closed magnetic circuit of the claimed electromagnet in Figures 5-16 must be necessarily composed of a combination of a magnetically soft and a magnetically hard material, since the formation of the magnetic circuit of the electromagnet only of the magnetically hard material, for example from alloys KSP37A (SmSo) or UNDK15, UNDK18S, UN13DK24, UN13DK25, UN14DK25, etc significantly increases the cost and therefore reduces the efficiency of the claimed invention.

Moreover in this case it is necessary to spend significantly more energy for remagnetization of the magnetically hard material of the magnetic guide of the electromagnet.

The above mentioned combination of the magnetically soft and the magnetically hard materials in the magnetic circuit of the electromagnet in Figures 5-16 must be selected so that on the one hand it is possible to provide a remagnetization of the magnetically hard insert of the magnetic circuit with a possibility of transfer of the magnetic guide into one (from several) stable condition due to a "magnetic memory" of the magnetic hard material, and on the other hand it is possible to return the magnetic guide into the original condition of magnetization with minimal energy expenses and without the use of special means. In each of these cases the magnetically soft material performs the role of the magnetic guide with a relatively high magnetic permeability and a relatively low cost, the "magnetic memory" is provided by the use of the magnetically hard material, since the magnetically hard insert practically completely accumulates the magnetic energy generated by the magnetizing coil.

4. For effective use of the magnetic energy, a possibility of passing of the magnetic flux completely through the magnetically hard insert is provided, or in other words without leaks through parallel branches of the magnetic circuit of a magnetically soft material, especially through air gaps, since otherwise the possibility of realization of the claimed method can not be provided. In this case the area of transverse cross-section of the magnetically hard insert must have a magnitude which is comparable, and in an optimal case which is equal to the area of the transverse cross-section of the magnetically soft part of the magnetic guide, and their volumes (their masses) must be calculated depending on the concretely given attracting and holding forces.

5. It is necessary that the direction of vector of intensity of the magnetic field in the magnetically hard material practically coincide with the direction of location of the domains of a material of the magnetically hard insert, or in other words is necessary to satisfy the condition $\cos\alpha=1$, wherein $\alpha=0$ is an angle between the above mentioned directions;

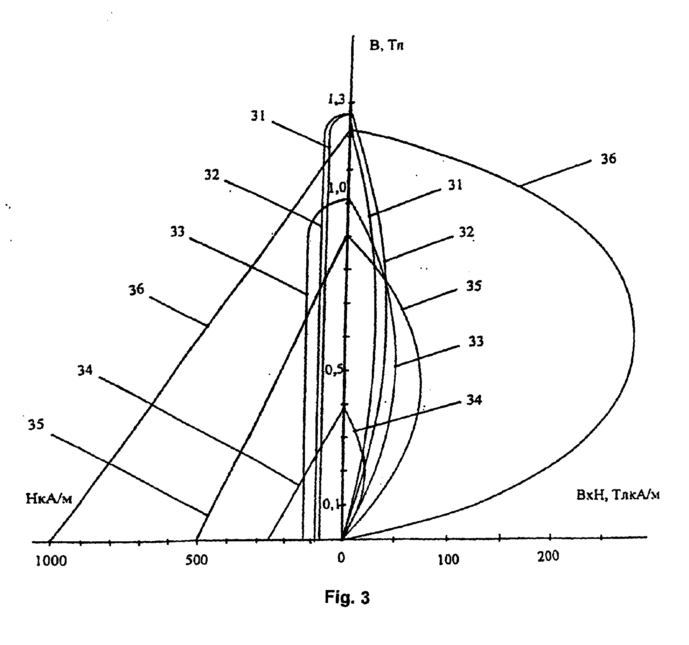

6. Used magnetically hard materials for a composite magnetic guide (alloys, sintered magnets, etc.) must have, if possible, a minimal energy which is necessary for their remagnetization (see curves 31-35 in Figure 3).

7. Supply of controlling magnetizing electromagnet pulse must end with minimization of an air gap, or in other words for satisfying a condition of maintaining a maximum magnetic energy which is applied to the magnetically hard material.

Satisfaction of the said conditions 1-7 is necessary for providing a remagnetization of the magnetically hard insert during the realization of the inventive method. Therefore, it is also necessary for a structural implementation of the invention in the claimed devices, which realize the claimed method.

In accordance with the invention the realization of these conditions is provided together with the realization of the claimed method for controlling of a magnetic flux in a composite magnetic guide of the electromagnet by means of:

- transformation of an opened composite magnetic guide into a ringshaped closed magnetic guide with a minimal air gap during its magnetization;
- and also by its reverse transformation into an open magnetic guide with a significant air gap during its demagnetization, or in other words during "zeroing" of the magnetic flux in the magnetic guide.

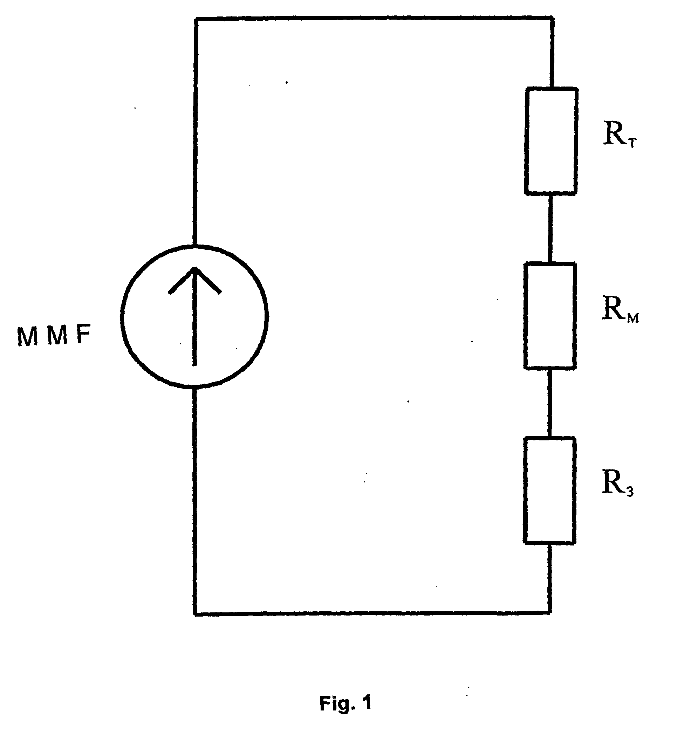

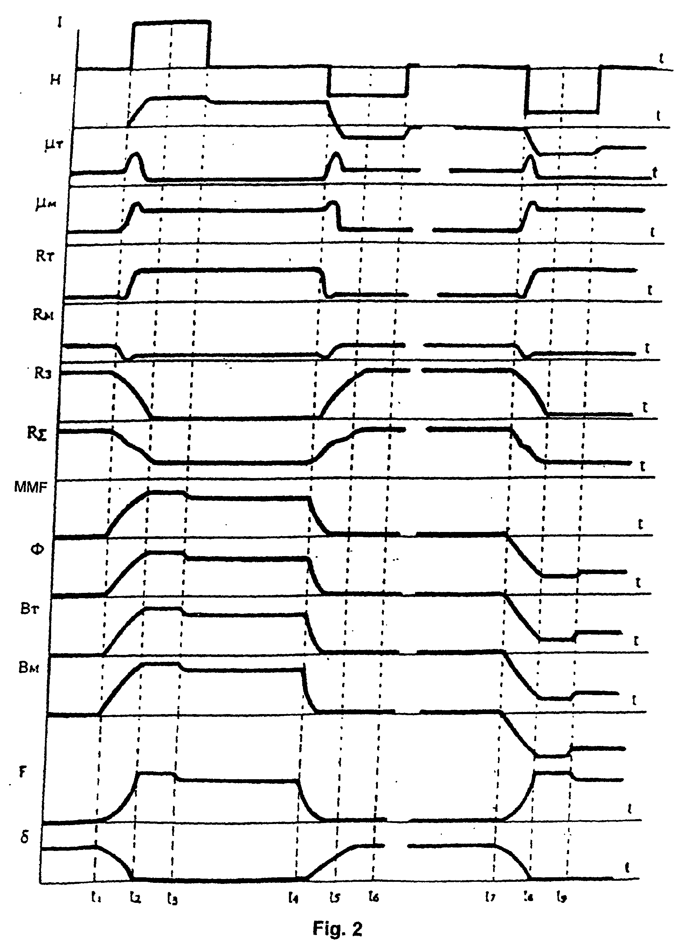

When these conditions are satisfied, the ringing of the magnetic flux over the ferromagnetic of the magnetic guide of the claimed electromagnet is provided, and MMF which is induced by the winding of the magnetizing coil is applied to the ferromagnetic of the magnetic guide of the claimed electromagnet between the magnetically soft part of the composite magnetic guide and a magnetically hard insert which is connected with it in series into the magnetic circuit. This redistribution is directly proportional to the magnetic resistances of these parts of the composite magnetic guide, or in other words inversely proportionally to their magnetic permeabilities (see equivalent diagram on Figure 1) since through each of these parts, connected in series with one another in the composite magnetic guide, the same magnetic flux $\phi$ passes. Since the magnetic permeability of the magnetically hard insert which is a part of the composite magnetic guide is significantly lower than the magnetic permeability of the magnetically soft part of the same composite magnetic guide, practically the whole MMF (or in any case its greater part) is applied to the magnetically hard insert, or in other words the intensity of the magnetic field in a magnetically hard insert will be significant, and its magnitude will be determined practically completely by the magnitude of MMF generated by the winding of the magnetizing coil. This provides a significant value of magnetization of the material of the magnetically hard insert which is determined by the value $B_{work.nom}$ of the magnetic induction on the curve of magnetization in Figure 2 for the material of the magnetically hard insert. This value $B_{work.mon}$ of the magnetic induction provides a holding force of the electromagnet, since F is proportional to a product

$$B_{work.nom} \times S \times m \times \cos\alpha,$$

wherein

$B_{work.nom}$ - a nominal value of working induction;

S-an area of a transverse cross-section of the magnetically hard insert;

M-a mass of the insert;

$\alpha$-an angle between a direction of a vector of intensity of the magnetic field generated by a magnetizing coil and a direction of orderly location of domains of the material of the magnetically hard insert. When these directions coincide, then $\alpha = 0$ and $\cos\alpha = 1$.

In this case with consideration of the satisfaction of the above mentioned conditions 1-7, the composite closed magnetic guide of the electromagnet operates as a permanent magnet which is magnetized practically to a maximum value of the magnetic induction, or in other words to a value which is close to a saturation of a magnetically hard material. In these conditions, it is preferable to form the insert of the magnetically hard material, for example from alloy "Alnico" or in other words an alloy of aluminum(Al), nickel (Ni) and cobalt (Co), and in particular from any of many variants of the alloy which are sufficiently widespread and sufficiently inexpensive, wherein the most suitable for the realization of the invention are alloys with a lowest energy for their remagnization, for example the alloy UN13DK24, which is ludicated in Figure 3 with number 31 and is characterized by a value of the magnetic induction which is close to the magnetiude of the induction of saturation $B_{max}$, and correspondingly provides an attractive force F which several times exceeds the force of a permanent magnet composed of the same materials with the same sizes as the insert in the composite magnetic guide. In other words, for the cases of the use of the same magnetically hard material as the insert in the close circuit of the magnetic guide, the magnetic induction will be significantly higher than in the opened magnetic circuit, and in particular

$$P_{work.nom} : B_{max} = 10 \div 15$$

For example the magnetically hard insert with a diameter 6mm and height 3 mm from alloy UN13DK24 in the closed magnetic circuit provides the holding force 2.8kg, and as a permanent magnet less than 200 g.

The insert with a diameter 12 mm and height 8 mm provides the holding force in the closed magnetic circuit 15 kg, and as a permanent magnet less than 1 kg.

The composite magnetic guide of the claimed electromagnet (Figures 5-16) is composed of a movable 1 and an immovable 2 part and formed with a possibility of closing a magnetic circuit with minimization of the air gap. In this case the immovable part 2 (Figures 5-6), which is a stator of the magnetic guide, is formed as a flat base with four insert 3 mounted on it and composed of magnetically hard material KSP37A(SmCo) and magnetizing coils 4, and also a normally closed contacts 5 and 6 connected in series in the power supply circuit of the magnetizing coil with an opening 7 formed in the center of the bottom 2 for passing a pusher 8 of switching off of the contacts. The movable part 1 which is a core of the magnetic guide is formed as a steel (steel St3) plate with rods 9 mounted on it (steel St3), formed with a possibility of a reciprocating displacement along the axes of the rods. The electromagnet is provided with two return springs 10 and 11, and is closed from a top with a plug 12. An additional technical result obtained from the use of the claimed device shown in Figures 5-6 resides in a possibility of realization of the invention in actuating devices of a rod type, i.e. in devices whose drives can be located between magnetizing coils, i.e. coaxially with the electromagnet system. These can be actuating devices in magnetic starters, contractors, vacuum switches, closing devices for blocking of locks of save boxes, automobiles, doors, etc. constructions which prevent an unauthorized penetration, and also in locking valves, etc. When compared with known constructions of an electromagnet the claimed invention provides the possibility of operation in a pulse mode without consumption of energy by the windings 4 of the magnetizing coils in stable conditions, with the exception of moments of switching. As a result, finally there is a possibility to considerably (by one order and more) increase current intensity in the windings 4 of the coils and a number of amper-convolutions of the magnetizing coil and correspondingly to increase pulling and holding forces of the electromagnet with a simultaneous reduction of its mass-size characteristics.

Explanations of pecularities of variants of carrying out of the construction of the claimed electromagnet and pecularities of the claimed method realized in these constructions are presented below. These pecularities of carrying out of the invention are their concrete illustrations and do not present any limitations for the invention as a whole.

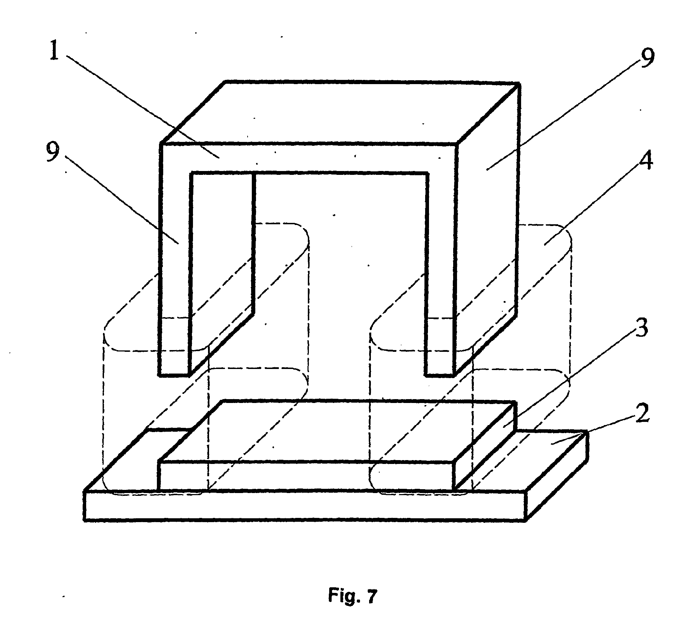

In the electromagnet of the electromagnet drive in Figure 7, the coil 1 is formed as a steel plate (steel 10) which is π-shaped in a longitudinal cross-section, wherein the rods 9 are formed from the plate 1 of the core, and the stator 2 is formed as a bar and provided with an insert 3 of a magnetically hard material, which is also formed as a bar of alloy KSP37A (SmCo) mounted on the stator. The additional technical result obtained from the use of the claimed device shown in Figure 7 resides in expansion by means of its use, for example, in magnetic starters, which provides an optimal setting of the apparatus.

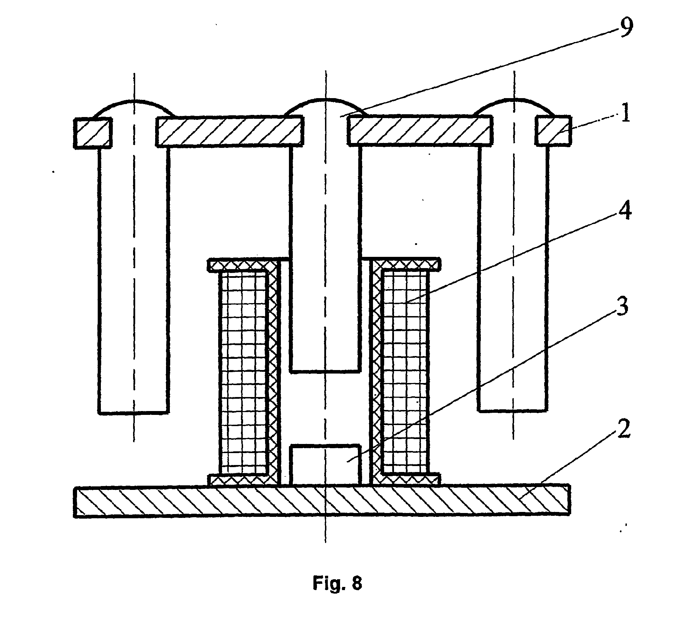

In the electromagnet of the electromagnetic drive shown in Figure 8 the magnetic guide is formed as two plates 1 and 2 of a magnetically soft material (St 3). A magnetically hard insert 3 (alloy UNDK15) is fixed to the plate 2 (stator) and is located in an axial passage of the magnetizing coil 4. The core 1 is formed as a steel (steel 10) plate and three rods fixed with their ends to a plate 1 which is ш-like in a longitudinal cross-section. The rods 9 have a length to provide closing of the magnetic flux in a magnetic guide with minimization of the air gap with a reciprocal lineardisplacement of the core. The additional technical result obtained from the use of the claimed invention shown in Figure 8 also resides in expansion of functional possibilities of the claimed electromagnet by means of its use, for example in contactors, etc., with providing an optimal setting of the electromagnet system with a minimal metal consumption.

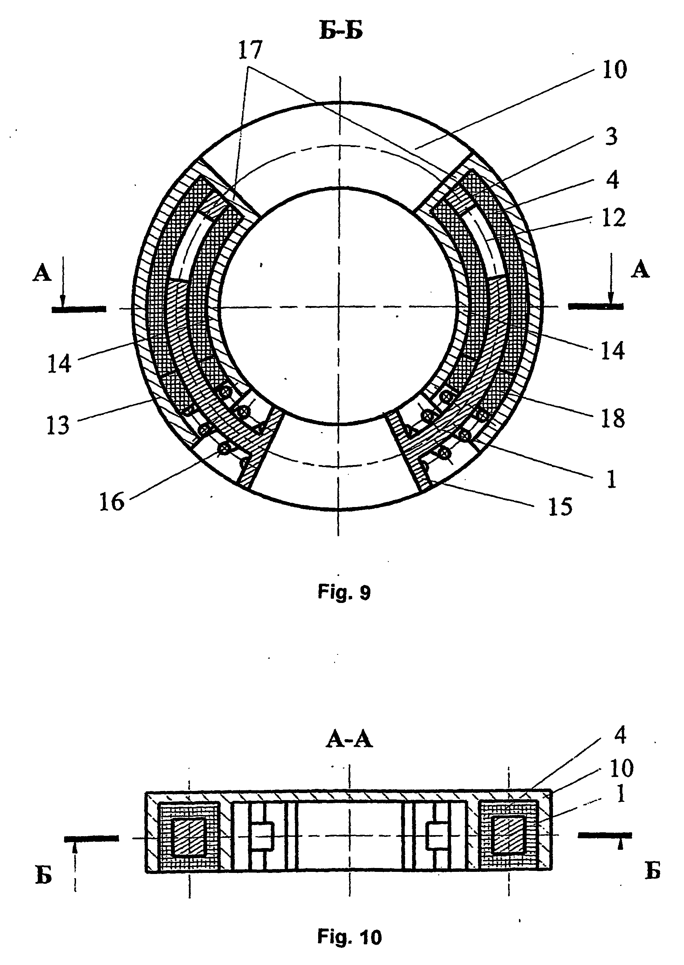

With the electromagnet of an electromagnetic drive shown in Figures 9 and 10, the magnetic guide is formed with a possibility of closing the magnetic circuit with minimization of the air gap due to a reciprocating displacement of the core along an arc of the circle 1, and it contains a steel (St3) housing 10 formed as a disc, with two horse shoe-shaped magnetic systems located on it and formed as circular segments 11. Each segment has a passage-slot 12 with coaxial side walls 13 and 14 extending along an arc of a circle. The windings of the magnetizing coils 4 are located in the housing 10. The coil 1 formed as a rod with a top 15 and a return spring 16 is located in the passage-slot 12 and formed in correspondence with the shape of the slot with a possibility of reciprocating displacement in it along the arc of the circle. The insert 3 of magnetically hard material-alloy KSP37A (SmCo) is located on the bottom of the passage-slot 12 and fixed to its wall 17, which is orthogonal to the direction of displacement of the core 1 and limits its displacement. In addition to the windings of the magnetizing coils 4, windings of demagnetizing coils 18 are located in the housing 10 and provide a supply of controlling pulse of opposite polarity. The additional technical result provided from the use of the claimed device shown in Figures 9 and 10 resides in expansion of functional possibilities of the claimed electromagnet by means of its use for example in overrunning and ratchet couplings due to creation and use of additional functions of these couplings and in particular turning on, turning off, changing of directions of rotation, angular displacement with a given step. Also, this is achieved by its use in valves of hydraulic systems with a possibility of regulation of a cross-section of a passage.

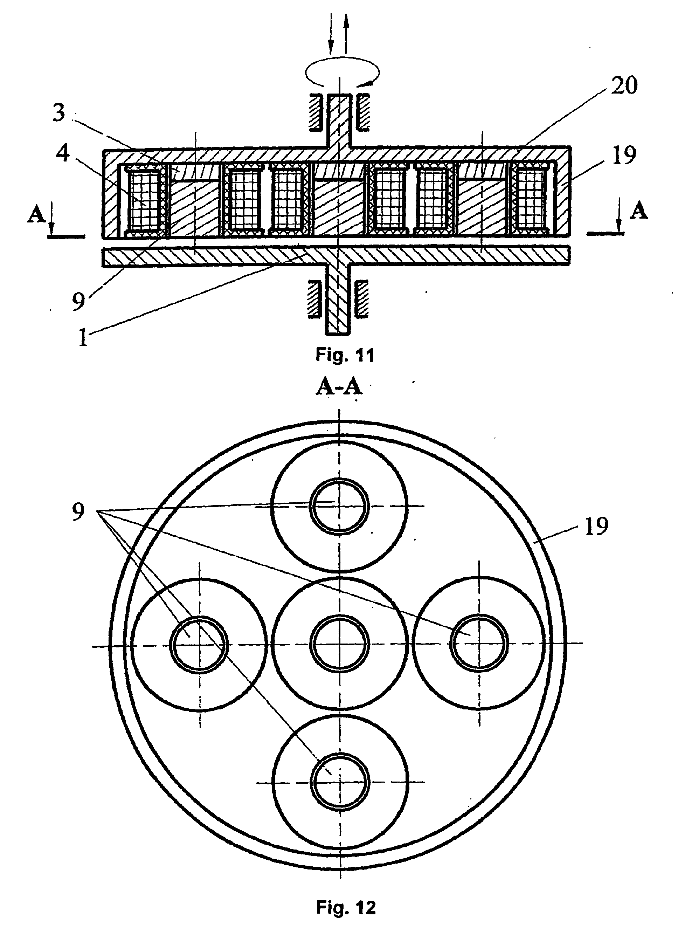

In the electromagnet of the electromagnetic drive shown in Figures 11 and 12 the magnetic guide is formed with the possibility of closing of the magnetic flux with minimization of an air gap due to reciprocating linear displacement of the core relative to the stator formed as a steel cup 19 which is turned upside down (steel St3). The stator is provided with five rods 9 (steel St3), which are partially composed of a magnetically hard material-alloy KSP37A (SmCo) in form of insets 3 connected to the bottom 20 of the cup 19. Each rod 9 is connected to the insert 3 and forms its extension so that the outer end surfaces of the rods 9 are located in the same plane with the end surface of the cup 19. Each of the rods 9 is surrounded by a magnetizing coil 4, while the movable core 1 is formed as a disc with the possibility of closing of the magnetic circuit of the magnetic drive with its surface during the reciprocating linear and/or rotary displacement of the core 1 relative to the stator 9. This variant of carrying out of the electromagnet is characterized in that, as the movable core 1 it is possible to use structural elements of metal scrap and/or load, and because of this the claimed electromagnet can be used as an economical method of transportation of scrap and other metallic loads. When the electromagnet is formed with a possibility of reciprocating linear and/or simultaneously rotary displacement of the core relative to the stator, the claimed construction can be used as a coupling for torque transmission, as a braking mechanism and for other similar purposes. Thereby the functional possibilities of the claimed electromagnet are expanded even more. In the claimed variant of the electromagnet the magnetizing coils are connected so that they create coordinated adding magnetic fluxes in the magnetic guide. In the analyzed variant of carrying out of the claimed electromagnet, the winding of the coil 4 arranged on the middle of the rod 9 can be connected with the possibility of creating an opposite magnetic flux and using it for demagnetization. An additional technical result of this variant of the claimed electromagnet resides in a possibility of changing a moment of a friction force between the core and the stator.

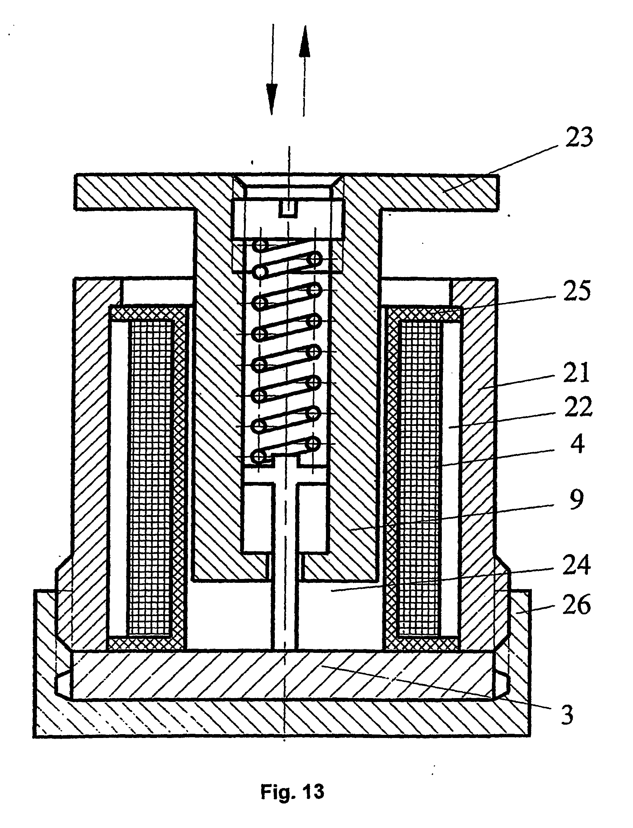

In the electromagnet of the electromagnetic drive shown in Figure 13, the magnetic drive is formed with the possibility of closing of the magnetic flux with minimization of an air gap due to a reciprocating linear and/or rotary displacement of the core relative to the stator. In this case the stator is formed as a (steel St3) cup 21, with a bottom 3 composed of a magnetically hard material - alloy KSP37A (SmCo) and pressed against an end surface of the cup 21 by a screw cap 26 composed of a non magnetic material. The magnetizing coil 4 is coaxially located in the inner cavity 22 of the cup 21 and the core is formed as a cover of the cup 23 connected to the steel (steel St3) rod 9 which is coaxially located in the inner cavity 24 of a casing 25 of the magnetizing coil 25. The magnetic guide is formed with the possibility of closing of the cup 21 with the cover 23 with the simultaneous touching of the thee end of the rod 9 with the bottom 3 of the cup 21 and formation of a volume-closed construction "cup 21-cover23-rod 9-bottom 3 of the cup 21" and a magnetization of the bottom 3 of a magnetically hard material with providing a holding force of the electromagnet which is practically equal to a pulling force generated by the magnetizing winding 4 with the possibility of changing a moment of a friction force between the core and the stator. The additional technical result of this variant of the claimed electromagnet shown in Figure 13 resides in an increase of a length of stroke, since the rod of the core is located inside the cup along its whole length and also an increase of reliability due to increase of interference protection of the magnetic system from influences of external magnetic fields.

In the electromagnet of the electromagnetic drive shown in Figure 13, the bottom 3 of the cup 21 is formed of a magnetically hard material provided from the outer side with a magnetically soft layer 27, which allows to increase the holding force of the electromagnet due to the increase of the area of the magnetically hard material which participates in a remagnetization and "memorization" of the magnetic flux.

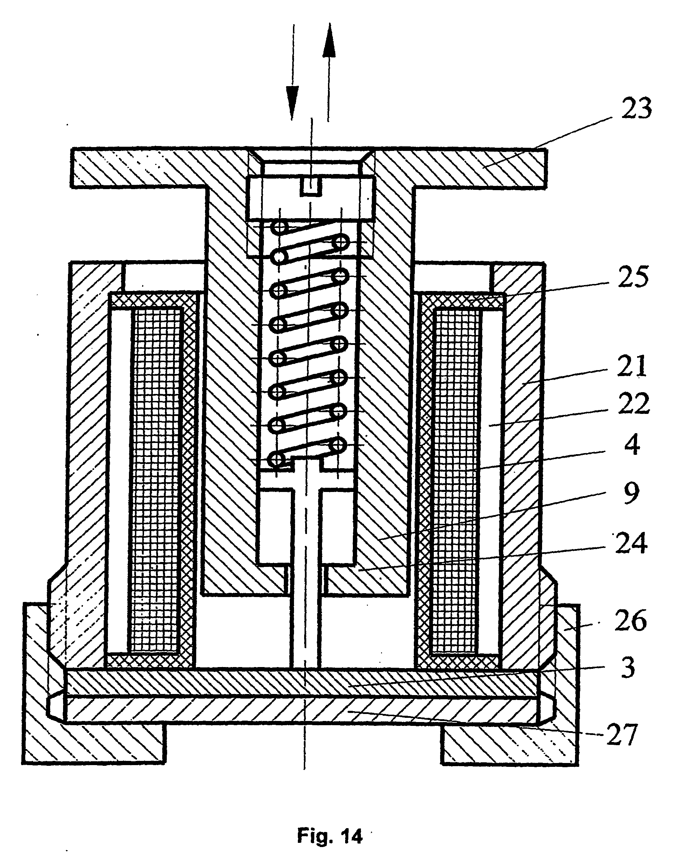

In the electromagnet of the electromagnetic drive shown in Figure 14, the button 3 of the cup 21 is composed of a magnetically hard material, and its surface from the side of the core is formed with an insulation in form of a layer 27 of a magnetically soft material. This allows to impart to the core a rotary movement without a risk that due to the friction between the core and the stator, irreversible processes in a domain structure of the magnetically hard material of the bottom 3 of the cup 21 can occur.

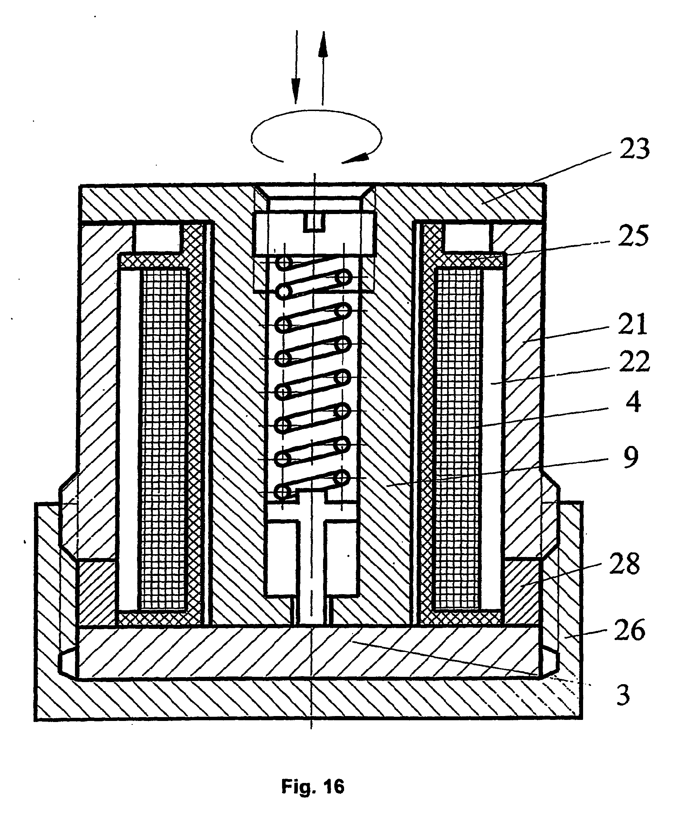

In the electromagnet of the electromagnetic drive shown in Figure 16, the stator, in form of the hollow steel cup 21, which at least partially is composed of a magnetically hard material in form of a ring 28, a bottom 3 of the cup 21 is composed of a magnetically soft material and is pressed by a screw cap 26 of a non-magnetic material against the end surface of the cup 21.

The additional technical result obtained from the use of the variant of the claimed device shown in Figure 16 resides in a possibility of providing a linear reciprocating displacement and change of a moment of friction force between the core and the stator.

It is analytically determined and confirmed practically that the increase of the number of the rods of the rod core of the claimed electromagnet allows to increase the area of transverse cross-section of each of them, since for the claimed construction (see for example Figures 5-16) a total area of their transverse cross-section is important. On the other hand, the series connection of the magnetizing coils of these rods allows to reduce a total quantity of amper-convolutions provided by these windings, i.e. to maintain (and even increase) MMF and an attracting force provided by the electromagnet with a simultaneous reduction of copper consumption, since structurally a significant reduction of an average length of the convolution $l_{av}$ of the winding is provided, which creates the necessary amper-convolutions. Therefore in the electromagnet with a movable rod core, which use four cups, an additional effect is provided in the economy of a copper consumption approximately two times.

Moreover, an additional effect of the claimed group of inventions is determined analytically and confirmed experimentally, in that the pulse power supply of the windings of the magnetizing coils of the claimed electromagnet, independently from the above mentioned effect, allows to reduce copper consumption 3÷5 times more (depending on the structural pecularities) due to the increase of the electrical power of the controlling pulse. This is connected with the fact that the short time of the pulse action on the winding of the electromagnet and the absence of electrical current in the winding before the supply of the second controlling pulse, in accordance with the present invention, provide such a thermal mode of exploitation of the electromagnet, that the windings of the magnetizing coils are not heated. Thereby, as practically determined, both additional effects together provide a reduction of metal consumption by 50-90%.

The use in the claimed method and in the claimed electromagnet of a demagnetizing current pulse allows to use as the magnetically soft material of a composite magnetic guide, any magnetically conductive steel, including conventional structural steel, instead of the special electrotechnical steel, without the risk that the movable core will adhere. In addition, the pulse control of the electromagnet provides a reduction of losses in steel (eddy currents, losses for remagnetization, etc.) which allows to get rid of a composite, or in other words particulate, core of the electromagnet. This reduces the cost, which is an additional technical effect provided by the claimed invention.

The absence of current in the magnetizing coil of the electromagnet in two basic conditions of the magnetic guide provides the absence of noises and vibrations when compared with the magnetic conditions of contactors (starters, etc), whose windings in a working condition are under voltage, which represents also an additional technical result. This leads to an increase of exploitation reliability due to reduction of "low mechanical wear" of contacts and parts of the electrical drive, which as a result increases the efficiency of the claimed group of inventions.

The supply to the magnetizing winding of the claimed electromagnet of short term controlling current pulses allows, with comparable pulling characteristics and holding forces of the electromagnet, to reduce significantly the metal consumption of the claimed electromagnet and to increase the current intensity of the controlling pulse. This is another additional technical result provided by the claimed invention and residing in significant reduction of mass-size characteristics.

The reduction of the mass of the movable parts of the electromagnet and simultaneously a significant reduction of possibility of riveting in places of mechanical contact of the metallic parts also contributes to the increase of efficiency. Also, the effect of pneumatic dampening of the rods of the core in internal cavities of the magnetizing coil, which is an additional technical result from the use of the claimed group of inventions, contributes to it.

An additional technical result from the use of the claimed invention is that in the case of the use of the invention in contactors, switches and etc. devices, the pecularity of the claimed invention lead to the fact that first of all a force of compression of the contacts of the contactors does not depend on reduction of supply voltage, and secondly the increase of supply voltage can not lead to a heating of the winding of the magnetizing coil of the contactor, since in a working condition it is currentless and does not use electrical energy.

A qualitative-quantitative analysis is presented herein below, which must be considered as an example of realization of the claimed method, and also of the claimed electromagnet. From this analysis the peculiarities of the claimed method of controlling of the magnetic flux in the composite magnetic guide of the claimed electromagnet and peculiarities of the construction of the claimed electromagnet become even more clear.

For analysis of the magnetic circuit, it is convenient and accepted to use analogy between magnetic and electrical circuits. In this case the magnetic circuits usually can be presented as electrical diagrams which represent flowing of electrical current in a circuit that is electrically analogous to the analyzed magnetic circuit. Herein below those analogous electrical circuits are analyzed. The electrical circuit shown in Figure 1 represents an equivalent closed magnetic circuit of the composite magnetic guide of the claimed electromagnet. In this case the magnetic guide, at least partially is composed of a magnetical hard material. An analysis of this circuit is given herein below, presented as elements connected in series. A part of a magnetic guide (on the diag am of Figure 1) composed of a magnetically hard material is shown as a source of a magnetically moving force (MMF) and a magnetic resistance $R_T$ of a magnetic material, while a part composed of a magnetically soft material is shown as a magnetic resistance $R_M$. Correspondingly an air gap of a composite magnetic guide is shown in Figure 1 as a magnetic resistance $R_3$. For simplification the analysis is made with an assumption that a dispersion of the magnetic flux, eddy currents, and other non-important phenomena for explanations are conditionally considered within the magnetic resistance $R_3$ of the air gap. Then the magnitude of the magnetically moving force MMF of the analyzed circuit is proportional to the residual magnetization of the magnetic guide of the material, and magnitudes of magnetic resistances $R_T$, $R_M$, $R_3$, of correspondingy magnetically hard material, magnetically soft material and air gap are proportional to magnetic permeabilities corresponding $\mu_T$ of magnetically hard material, $\mu_M$ of magnetically soft material, and $\mu_3$ of the air gap. In addition, they are correspondingly proportional to the duration (length) of the power flux lines of the magnetically hard material, magnetically soft material, and magnitude of air gap. It is clear that with increase of duration (magnitude) of air gap, the magnetic resistance $R_3$ of this air gap will increase in a square ratio, and vice versa with reduction of duration (magnitude) of the air gap, the magnetic resistance $R_3$ of this gap will reduce in correspondence with this ratio.

Figure 2 shows time diagrams of the parameters that characterize the physical processes which take place in a composite magnetic guide of the claimed electromagnet, which is at least partially composed of a magnetically hard material, during the realization of the claimed method of controlling the magnetic flux of the electromagnet. On the diagram I (t) a time dependence of the controlling pulses of electric current in the winding of the magnetizing coil is presented, or in other words dependence of the magnitude of electric current from time. Analogously, on diagram H(t) a time dependence of voltage of magnetic field is shown. On the diagram view $\mu_T(t)$ a time dependency of the magnetic permeability in the magnetically hard material is shown. On the diagram $\mu_m(t)$ a time dependency of the magnetic permeability of the magnetically soft material is presented. On the diagram $R_M(t)$ a time dependency of the magnetic resistance of the magnetically hard material is presented. On the diagram $R_3(t)$ a time dependency of the magnetic resistance of the magnetically soft material is presented. On the diagram $R_3(t)$ a time dependency of the magnetic resistance of the air gap is presented. On the diagram $R_E(t)$ a time dependency of a total magnetic resistance of the composite magnetic guide is presented. On the diagram MMF(t) a time dependency of the magnetic moving force acting in the magnetic guide is presented. On the diagram $\phi(t)$ a time dependency of the magnetic flux in the magnetic guide is presented. On the diagram $B_T(t)$ a time dependency of the magnetic induction in the magnetically hard material is presented. On the diagram $B_M(t)$ a time dependency of the magnetic induction in the magnetically soft material is presented. On the diagram F(t) a time dependency of a force of the electromagnet which attracts the core is presented. On the diaphragm $\delta(t)$ a time dependency of the magnitude of the air gap is presented.

From the time point t, an increase of voltage H of the magnetic field to a value determined by an amplitude of the controlling pulse of the electric current I in the winding of the magnetizing coil starts. In accordance with the increase of voltage H of the magnetic field from the time $t_1$ an increase of magnetic permeability $\mu_T$ of magnetically hard material starts from the value $\mu_0$ to the value $\mu_{max}$ and subsequent its reduction to the minimal magnitude $\mu_{min}$ caused by saturation of the magnetically hard material. Analogous changes take place for the magnetic permeability $\mu_M$ in the magnetically soft material. In this process the magnetic permeability $\mu_M$ of the magnetically soft material which does not have a clearly expressed saturation, increases to the value which is 1.5-2 times greater than the magnetic permeability $\mu_T$ of the magnetically hard material, which is a clearly expressed saturation (see Figure 2 and Table 1). The changes in time of the magnetic resistance $R_T$ of the magnetically hard material and the magnetic resistance $R_M$ of the magnetically soft material which represent these values are inversely proportional to the corresponding magnetic permeabilities and shown on the time diagrams $R_T(t)$ and $R_M(t)$ correspondingly. As can be seen from the time diagrams $R_T(t)$ and $R_M(t)$, the said magnetic resistances in a moment of time to t1 start reduce, and this reduction continues until the current values $R_T(t)$ and $R_M(t)$ reach the values determined by a magnitude of maximum magnetic permeability $\mu_{max}$, wherein the magnetic resistance of the magnetically soft material assumes its final value which 1.5-2 times lower than the magnetic resistance of the magnetically hard material. A total magnetic resistance $R_E$ of the composite magnetic guide at least partially composed of a magnetically hard material (see Figure 1) can be presented as a sum of the magnetic resistances of the magnetically hard material $R_T$ a magnetically soft material $R_M$, and an air gap $R_3$. It should be mentioned that the value of the magnetic resistance of the value $R_3$ of the air gap is a function which is proportional to square of the magnitude of the air gap $\delta$ and which starts reducing in the moment of time t1, while in the moment of time $t_2$ it reaches its minimal value. In the same time moment, the magnitude of the magnetic resistance of the air gap $R_3$ reaches its minimal value.

The magnitudes of magnetic inductions $B_T$ in the magnetically hard and $B_M$ in the magnetically soft materials and the magnitude of the magnetic flux $\phi$ in the magnetic guide, and also the value of the magnetic moving force MMF in the moment of time t1 start increasing due to increase of voltage of the magnetic force H and reduction of a total magnetic resistance of the magnetic guide $R_E$ and ends its increase after the end of increase of voltage of the magnetic field H, and of the process of magnetization of the magnetically hard and magnetically soft material and of the process of minimization of the air gap. The attracting force F1 which is a function of the magnetic flux and is inversely proportional to square magnitude of air gap also starts increasing at the moment of time t1 and reaches at maximum value its reaching by the value of air gap $\delta$ of its minimal value.

The above mentioned physical magnitudes maintain their values to the moment of time t3, i.e. to the moment of end of action of the controlling pulse of the electric current in the winding of the magnetizing coil. In this time moment t3 the voltage H of the magnetic field and the magnetic force MMF start reducing. However, this reduction is limited by a preserved magnetization of the magnetically hard material, and the magnitude of magnetization of the magnetically hard material in turn is limited by a low total magnetic resistance $R_E$ of the magnetic guide, which is maintained due to high voltage H of the magnetic field. Thereby a fact which is practically found by, that and was not known before, takes place, namely a presence of a positive feedback between the above mentioned magnitudes and in particular between H, $B_T$, $B_M$, $\mu_T$, $\mu_M$, $R_T$ and $R_M$. These magnitudes mutually prevent reduction of each other.

Thus, with reduction of voltage of the magnetic field H (see Figure 2) the residual magnetic induction (magnetizatin) of the magnetical hard material generates a magnetically moving force MMF whose magnitude is the greater, the greater $B_T$. In the closed magnetic circuit $B_T$ of the magnetic guide (see for example Figure 1) the magnetically moving force MMF generates a magnetic flux $\phi$, whose value is

$$\phi = MMF / R_E \qquad (1)$$

wherein $R_E$ is a total magnetic resistance of the equivalent magnetic circuit on Figure 1.

At the same time

$$R_E = R_T + R_M + R_3 \qquad (2)$$

wherein $R_T$ - a magnetic resistance of the magnetically hard material of the magnetic guide
$R_M$- a magnetic is a magnetic resistance of a magnetically soft material of the magnetic guide;
$R_3$ -a magnetic resistance of the air gap.

As a result of this, the magnetic flux $\phi$ determines the magnetization of the magnetically soft material. A result of the above mentioned phenomena is that the magnetic permeabilities of the magnetically hard material $\mu_T$ and of the magnetically soft material $\mu_M$ correspondingly of the magnetic guide remain practically the same as in the interval of time from t1 to t2 in Figure 2. Therefore the magnetic resistances $R_T$ of the magnetically hard material and correspondingly $R_M$ of the magnetically soft materially practically do not changetheir magnitudes during the remagnetization, i.e. during magnetization and demangetization. Since the value of the air gap $\delta$ remains minimal (minimized), the magnetic resistance $R_3$ of the air gap and a total magnetic resistance $R_E$ of the equivalent closed circuit on the magnetic drive in Figure 1 retain their values at the level which is close to the values that took place in the interval of time from t1 to t2 in Figure 2. This new property of the composite magnetic circuits that was discovered by the inventor of this invention have a great importance for the claimed group of invetions-the claimed method of controlling a magnetic flux in a composite magnetic guide of the electromagnet and the claimed construction of the electromagnet in which this method is used, since it determines a so-called "effect of lock" or effect which is analogous to a "trigger effect". As a result of the above mentioned processes, the voltage of the magnetic fuel H, a magnitude of the magnetic induction $B_T$ in the magnetically hard and $B_M$ in the magnetically soft material, the magnetical moving force MMF, the magnetic flux $\phi$ and the attracting force F of the electromagnet maintain their values at the level of 80-98% of the values, which these variables had in the moment of time $t_3$. The described condition is only one of stable conditions of the magnetic guide. This stable condition is maintained till supply of a second controlling pulse into the magnetizing windings at the moment of time $t_4$.

In the examined case the second controlling pulse must have an opposite (when compared with the first controlling pulse) polarity and its magnitude I must provide voltage H of the magnetic field, which is equal to coercitive force Hc of the magnetically hard material (see diagram H(t). On time diagrams this condition corresponds to the time moment t5. In this time moment a complete demagnetization of the magnetically hard material takes place, i.e. a current value $B_T$ reaches a value $B_T$=0, while a magnetic permeabilities $\mu_T$ of the magnetically hard and $\mu_M$ of the magnetically soft materials, magnetic resistance $R_T$ of magnetically hard and $R_M$ of the magnetically soft materials, $R_3$ of air gap and a total magnetic resistance $R_E$ of the magnetic guide, magnetic inductions $B_T$ of the magnetically hard and $B_M$ of the magnetically soft materials, magnetic flux $\phi$, attracting force F and the magnitude of an air gap $\delta$ are subjected to changes which have a nature opposite to the changes described within the time interval from t1 to t2, without consideration of remagnetization of the ferromagnetic materials of the magnetic guide, i.e. without consideration of peculiarities of remagnetization of the magnetically soft material of the core and the magnetically hard material of the insert. The current value of the magnetic flux $\phi$=0 and described values of other parameters characterize a second stable condition of the electromagnet.

On the time diagram I(t) shows the beginning of the action in the moment of time t7 of the second controlling current pulse in a winding of the magnetizing coils is shown, providing one more, third, stabile condition of the magnetic guide which is analogous to the stable condition described in the interval from t3 to t4 with a difference that a vector of the magnetic flux $\phi$ has a direction which is opposite to the direction described in the interval of time from t3 to t4. For obtaining of this (third) stabile condition, it is necessary to supply in the winding of the magnetizing coil a controlling pulse whose polarity is opposite to the polarity that takes place in the interval of time from t1 to t2, with an amplitude which is sufficient for remagnetization of the magnetically hard material, or in other words with an amplitude which is greater than $H_T$ (see Figure 2, time diagram H (t) in the interval of time from t4 to t6). Time dependencies of the parameters shown in Figure 2 in the interval of time from t3 to t4 will be the same as in the interval of time from t1 to t2, with the difference that the voltage of the magnetic field H, the magnetic flux $\phi$, the magnetic inductions $B_T$ of the magnetically hard and $B_M$ of the magnetically soft materials will have an opposite polarity.

The claimed electromagnet (Figures 5-16) operates in the following manner.

When voltage is supplied to the winding 4 of the magnetizing coil and a magnetic flux $\phi$ in the composite magnetic guide of the electromagnetic is excited, an attraction of the movable core 1 of the magnetic system to the immovable stator 2 takes place, regarding of the polarity of the supplied controlling voltage. This magnetic flux provides attraction of the core 1 of the magnetic system to the stator 2 with overcoming of a force generated by the return spring 10 and therefore minimizes the air gap $\delta$ of the magnetic guide of the electromagnet. After closing of the magnetic circuit, the magnetic flux $\phi$ in the closed magnetic guide is ringed. After removing the voltage from the winding 4 of the magnetizing coil, the magnetic flux $\phi$ accumulated in the mag-

netically hard insert continues to hold the domains oriented along the magnetic power flux lines. The maximum holding force depends on an initial pulse of the winding 4 and a volume of the material of the magnetically hard insert 3. After mechanical interruption of the magnetic circuit, the domains of boundary layers of the magnetically hard insert 3 are partially reoriented, which corresponds to a residual magnetization of the material of the magnetically hard insert. Due to this, the magnitude of the holding force F of the electromagnet reduces approximately by one order. A complete "zeroing" of the magnetic flux in the material of the magnetically hard insert 3 corresponds to the case of an approximately equal, i.e. approximately equally, subdivision of the domains with a mutually cancelling magnetic fluxes in the magnetic guide of the claimed electromagnet. The magnetically hard insert 3 from alloy Alniko after the magnetization in the composite closed guide becomes with its holding force by one order more powerful than the same insert which is magnetized outside of the closed magnetic circuit.

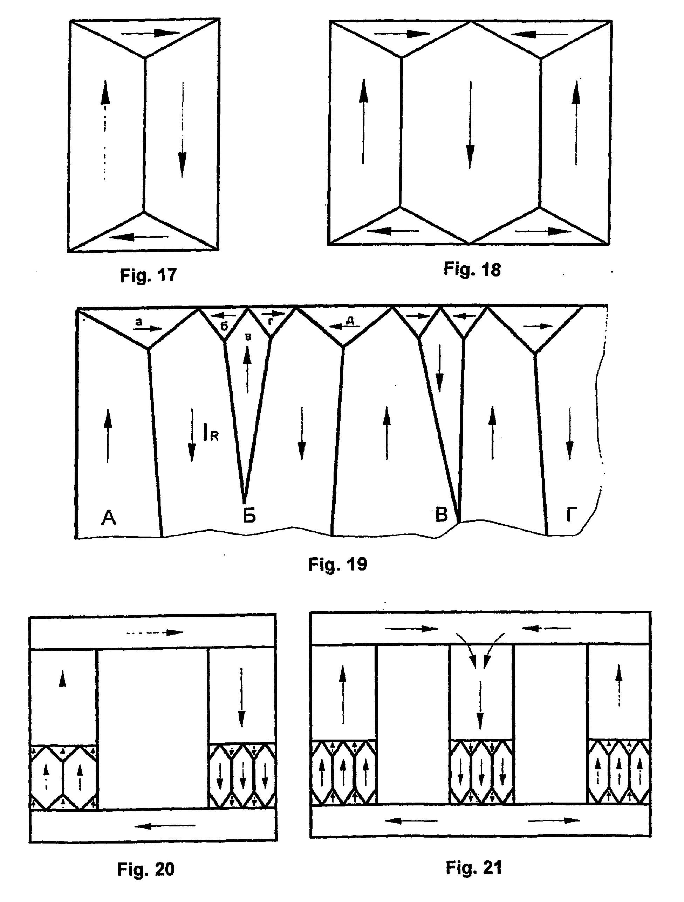

The magnetic flux in the composite magnetic guide provides a minimization of air gap δ in the magnetic guide, i.e. minimization of the magnitude of equivalent magnetic resistance of the composite magnetic guide, and a subsequent remagnetization of the magnetically hard material of the composite magnetic guide, and this remagnetization provides "memorization" of the magnetic flux in the currentless condition of the winding 4 of the magnetizing coil. This "memorization" of the magnetic flux can be explained in that, the magnetically hard insert 3 is a monocrystal or a pseudo monocrystal in the case of an anizothropic material with a hexagonal structure, which is automatically subdivided into domains, in which the magnetic flux is completely closed within the simplest sample (Figures 17-21), while outside of it the magnetic force at the end surfaces of the elements of the magnetic guide practically completely disappears. Near the surface of the same between the domains, border layers of a finite thickness are created. In their volume, in accordance with a certain low, a turning of the vector of magnetization $I_s$ occurs from its orientation in one domain to its orientation in another domain. For the formation of the border layer, a certain "border" or surface energy is spent, whose magnitude is significantly smaller than the volume energy disappearing during the formation of the ringing field of the sample. Thereby, the formation of domain structure is in effect of self-closing of the ferromagnetic bodies at the voltage H out = 0. The presence with H out = 0 of a residual magnetization $I_R$ in the samples (in the case of permanent magnets) can be explained by an influence of interval defects and the structure of the crystal, which make difficult the process of closing, i.e. during this process an incomplete compensation of the resulting magnetic moment of the whole sample is obtained and the presence of the dispersion field in the places of exit of the layers. Monocrystals which have a plane-parallel domain structure (see Figure 19) are composed of alternating areas, whose directions of magnetization are anti-parallel. In these cases and in addition to the main domains A, B, C, D...there are so-called closing a, b, c, d domains of a border layer.

If a "demagnetized" ferromagnetic layer with a domain structure is placed into outer magnetic field, it is "magnetized", i.e. the domains with the direction of magnetization which is closer to the direction of voltage of the external magnetic field with grow due to "eating up" of the volume of their less efficiently magnetized neighbors. This process is performed due to a displacement of border layers between the domains. Simultaneously with this, a turning of the vector $I_S$ of magnetization will occur with respect to a direction of the outer magnetic field-a process of rotation. A natural displacement of the borders of the domains and rotation of the vector of magnetization in them determine a type of dependency of the resulting magnetization of ferromagnetic samples and their magnetic induction from the outer magnetic field, determine a shape of a magnetization curve.

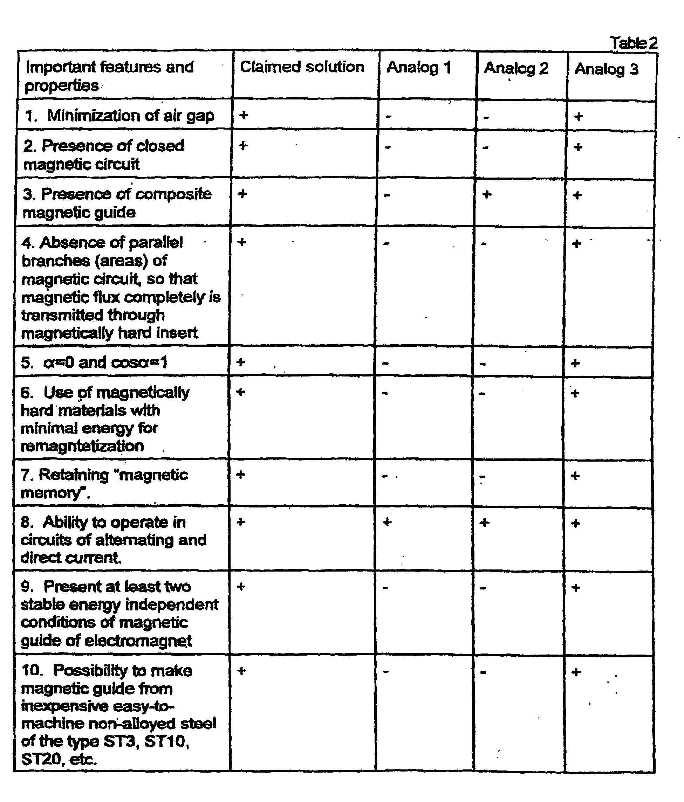

If a sample of a magnetically hard material is placed in a volume-closed magnetic circuit of the magnetic guide, formed of a magnetically soft material, then after the action by the outer magnetic field, the border layers of the sample are opened, oppositely directed domains of the sample are reoriented in correspondence with the outer magnetic field, and a simple domain structure shown in Figures 17, 18 is modeled. In other words, in this case the magnetically hard insert is fixed in condition with open border layers of domains and reoriented main domains, and the functions of the closing domains after interruption of pulse current supply into the winding of the magnetizing coil are transferred to parts of the core and the stator, located perpendicular to the direction of the outer magnetic flux-see Figures 20 and 21.

The claimed constructions allow to combine positive qualities of the magnetically soft material, whose magnetization curve is characterized by a higher magnetic sensibility (permeability) which determines increase of magnetization (induction) in weak fields, has a very narrow hoop of hysteresis, an insignificantly small coercive force, great residual magnetization close to the magnetization of saturation, with advantages of the magnetically hard material which is a stabile source of a strong field with a maximum broad (close to a rectangular) loop of hysteresis, i.e. with a high coercive force and residual magnetization, close to the magnetization of saturation.

MMF in the magnetically soft and magnetically hard materials are added.

After the mechanical breaking of the magnetic circuit of the composite magnetic guide on end surfaces of the magnetic guide demagnetization poles are created, and the insert 3 is returned to the condition corresponding to the residual magnetization, i.e. the ferromagnetic material becomes a bipolar permanent magnet, i.e. the magnetically hard insert transfers from the condition with maximum magnetization (border layers open) to the condition of residual magnetization (border layers closed), whose magnitude is lower by one order.

The return of the core 1 to an initial position is provided by a short-term current pulse into an oppositely wound winding, or by a pulse voltage of an opposite polarity with a calculated amplitude, or a calculated duration of current, or by a set of extinguishing pulse oscillations, or by action of a return spring.

The author confirmed by calculations and experiments a significant efficiency of the claimed group of inventions, which is provided both because of energy savings, and also on account of a significant reduction of accidental failures and increase of a service life without failure of commutating devices, i.e. due to increased work before failure, as well as due to significant expansion of functional possibilities of the use of the claimed variants of the construction of the electromagnet.

The claimed invention provides the following technical result during its use:

- Claimed electromagnet operates both in circuits of alternating current and direct current;
- Claimed electromagnet provides at least two stable energy-independent conditions of the magnetic guide;
- Magnetic guide of claimed electromagnet can be composed of a non-alloyed steel;.
- Claimed electromagnet provides a significant (by one order) increase of a pulling force or significant reduction of area of transverse cross-section and significant reduction of mass-size parameters, as well as a reduction of metal consumption of copper 3÷5 times and magnetically soft metal (steel)7-10 times.
- Reduction of inertia and increase of response time of the electromagnet;
- Reduction of riveting of elements of the magnetic guide and increase of their resistance;
- Increase of service life of executing contacts of a commutation electrical equipment;
- Increase of a holding force of claimed electromagnet with a magnetically hard insert of the composite magnetic guide, for example of alloy UN13DK24, which more than 3 times increases the holding force provided by a permanent magnet in the case of open non-composite magnetic guide of the same size composed of alloy of rare-earth metal, neodymium (Nd), iron (Fe), and boron (B). In accordance with the data of the author, this result could be reached with a previous solutions only with a deep cooling of the magnetically hard material;
- Significant expansion of functional possibilities of the claimed construction, including due to the possibility of its use in commutation electrical equipment, in electromagnetic couplings for transmission of torques, in braking mechanisms and similar constructions.

The above mentioned advantages of the claimed invention when compared with the known technical solutions, their features and properties are presented in generalized form in table 2 wherein the following indicators are used:

Analog 1 - technical solution from a German patent application DE 196 39545;
Analog 2 - technical solution from European patent EP 074540;
Analog III - technical solution from international application PCT/UA00/0005.

The analysis of the data of the table 2 and the above mentioned data confirms the correspondence of the claimed group of inventions to criteria of protection, and in particular to criteria of "novelty" "inventive level" and "industrial utility".

In addition, the claimed group of inventions satisfy the principle of unity of the invention, since one of the objects of the claimed group, and in particular a construction of the electromagnet, is provided for the use of the other object, in particular a method of controlling magnetic flux in the magnetic guide of the electromagnet.

Sources of information taken into consideration.

1. DE No. 19639545 A1 of 12/18/1997, ICON, AG PRAZISIONSTECINIC (1);
2. EP 0794540 A1 of 09/10/1997 HARTING KGaA CNJK, TW 2 CNIJRB prototype (2).
3. DE No. 19639545 A1 of 12/18/1997 ICON, AG PRAZISIONSTECINIC (3);
4. EP 0794540 A1 of 09/10/1997 HARTING KGaA CNJK, TW 2 CNIJRB prototype (4).
5. PCTUA00/0005 HO1F 7/16, 7/124, EO5B 47/02, 02/03/2000 BABICH, N. S.-prototype (5).
6. GOST 17809-72 Magnetically Hard Cast Materials, M, Gosstandart, 1986, p. 4-5;
7. A.D. Smirnov, K. M. Antipov, Guide Book for Energy Expert, M., Energoatomizdat, 1987, p. 254.

**Claims**

1. Method of controlling a magnetic flux of an electromagnet with a relay pulling characteristic, determined by stable levels of values of a magnetic flux in a composite magnetic guide, which at least partially is composed of a magnetically hard material, by supplying control pulses of electric current into a winding of a magnetizing coil with a possibility of obtaining a holding force of a movable part of the magnetic guide, with at least one air gap, **characterized in that** the magnetically hard material is used which has an ability to maintain during a remagnetization at least two stable conditions of magnetization, and as controlling pulses of electric current two short duration pulses of opposite polarity are supplied into the winding of magnetization of the composite magnetic guide, wherein during the supply of the first pulse, closing of the magnetic circuit of the magnetic guide is provided and minimization of a magnetic resistance of the magnetic guide due to minimization of air gap of the magnetic guide with a subsequent maximization of the magnetic flux in the magnetic guide and its transfer into one of stable conditions, **characterized by** a maximum value of the magnetic flux in the magnetic guide which corresponds to energy of controlling pulse action, with a possibility of staying of the composite magnetic guide of the electromagnet in the stable condition and providing a holding force til a supply of another controlling pulse of electric current of an opposite polarity whose energy characteristic in magnitude is sufficient for transfer of the magnetic guide into another stable condition which is **characterized by** another magnitude of the magnetic flux which corresponds to it, and another magnitude of the holding force which corresponds to it.

2. Method according to claim 1, **characterized in that** the supply of the first controlling current pulse into the winding of the magnetizing coil with a subsequent maximization of the magnetic flux in the composite magnetic guide is performed after the minimization of the air gap.

3. Method according to claim 1, **characterized in that** the supply of the first controlling current pulse into the winding of the magnetizing coil with a subsequent maximization of the magnetic flux in the composite magnetic guide is performed before minimization of the air gap.

4. Method according to claim 1, **characterized in that** the magnitude of the controlling magnetic flux in the composite magnetic guide of the electromagnet due to the first controlling pulse of electrocurrent in the winding of the magnetizing coil of the electromagnet before closing of the magnetic circuit of the magnetic guide is performed at a level of its optimal value which is necessary for generating a working pulling force of the electromagnet and it is maintained at this level until a magnetization of the material of the magnetic guide, and thereafter the electrical pulse voltage is removed from the winding of the magnetizing coil, while the holding force of the electromagnet is provided due to a "magnetic memory" of the material of the composite magnetic guide with the possibility of obtaining a holding force whose magnitude is
$F \leq 0.98\ F_{max}$, where $F_{max}$ is a maximum value of the magnetic force generated by the winding of the magnetizing coil.

5. Method according to claim 1, **characterized in that** the necessary power of the controlling pulses with a possibility of providing the required holding force of the electromagnet is provided due to change of parameters of the controlling pulses, selected from a set consisting of an amplitude of a pulse, its duration, its shape, and their combinations.

6. Method according to claim 1, **characterized in that** into the winding of the magnetizing coil a second controlling current pulse is supplied with a different energy characteristic when compared with a characteristic of the first controlling pulse, and a transition is provided of the magnetization of the magnetic guide into another stable condition which is **characterized by** a corresponding magnitude of a magnetic flux in the composite magnetic guide and a corresponding value of the holding force.

7. Method according to claim 6, **characterized in that** the transition of the magnetic guide into a stable condition **characterized by** the magnitude of the magnetic flux in the magnetic guide equal to zero is provided, by supplying into the winding of the magnetizing coil of a controlling current pulse which provides a voltage of the magnetic field in the magnetic guide equal to coercive force on a magnetizing curve and a corresponding magnitude of holding force.

8. Method according to claim 7, **characterized in that** one of the stable conditions of the composite magnetic guide is its initial condition which is **characterized by** a magnetic force whose magnitude is equal to an initial value and a holding force corresponding to it.

9. Method according to claim 7, **characterized in that** the power $P_2$ of the second controlling pulse of current of opposite polarity is 2-5 times lower than a power $P_1$ of the first controlling current pulse of a direct polarity and constitutes $P_1 = (2 \div -5)P_2$.

10. Method according to claim 1, **characterized in that** the duration t1 of the first controlling pulse of electric current of the direct polarity in the winding of the magnetizing coil and correspondingly a magnetic flux in the composite magnetic guide of the electromagnet of direct polarity and t2 of the second controlling pulse of opposite polarity do not exceed a triple magnitude of a constant of time $\tau$ of a transitional process for a mass of a movable part of the magnetic guide, i.e. $t1 \leq 3\ \tau$ and $t2 \leq 3\ \tau$, wherein $\tau$ is a constant of time of the transition process.

11. Method according to claim 1, **characterized in that** as the first controlling current pulse, into the winding of the magnetizing coil a pulse is supplied in form of a set of periodically modulated pulses, whose amplitude and/or enveloping curve increase from a zero value.

12. Method according to claim 1, **characterized in that** as a second current pulse, into the winding of magnetizing coil a pulse is supplied in form of a set of periodically modulating pulses whose amplitude and/or enveloping curve extinguish to a zero value.

13. Electromagnet of an electromagnetic drive of an executing device formed as at least one winding of magnetization on a composite magnetic guide with an immovable stator, a movable core and at least one air gap, wherein at least partially the magnetic guide is formed as an insert of a magnetically hard material with a possibility of controlling a magnetic flux in the magnetic guide by its remagnetization due to the supply of short duration current pulses of different polarity into the winding of magnetizing coil, **characterized in that** the magnetic guide is formed with a possibility of closing a magnetic flux with a minimization of the air gap due to reciprocating linear displacement of the core, wherein the stator is formed as a flat base with at least one insert of a magnetically hard material fixed on it, while the core is formed as a steel plate with at least two rods mounted on it by their ends.

14. Electromagnet according to claim 13, **characterized in that** it is additionally provided with a current breaker in the winding of the coil, formed as normally closed contacts which are connected in series in a circuit of power supply of the winding of the magnetizing coil and provided with a contact switch, wherein an opening located in a center of its base for passage of the contact switch, wherein the core is provided with a contact pusher which is fixed to the core and provided with at least one return spring.

15. Electromagnet according to claim 13, **characterized in that** the core is formed as a plate with a Π-like shape in a longitudinal cross-section, in which side rods are fixed with their ends, while the stator is formed as a bar provided with an insert of a magnetically hard material.

16. Electromagnet according to claim 13, **characterized in that** the magnetic guide is formed as two plates, at least two rods, and at least one insert of a magnetically hard material, wherein the core is formed with all-like shape with a longitudinal cross-section in form of one plate and two rods connected to it with their ends, while the stator is formed as a second plate with an insert composed of a magnetically hard material and fixed on it.

17. Electromagnet according to claim 13, **characterized in that** the magnetic guide is formed as two plates with at least one insert of a magnetically hard material connected to it and at least three rods connected by upper ends to a second plate so as to form a core with a ψ-like shape in a longitudinal cross-section with the possibility of closing of the magnetic circuit with minimization of an air gap.

18. Electromagnet according to claim 17, **characterized in that** the core is formed with a ɰ-like shape in a longitudinal cross-section, wherein at least two magnetizing coils are located preferably on the rods of the core with the possibility of creating coordinated magnetic fluxes in the central rod.

19. Electromagnet according to claim 18, wherein the magnetic guide is additionally provided with a magnetizing coil located on a central rod of the core, and its winding is connected in coordination with the windings of the magnetizing coils located on the end rods.

20. Electromagnet according to claim 19, wherein the winding of one of the magnetizing coils is connected in opposition.

21. Electromagnet of an electromagnetic drive of an executing device formed as at least one magnetizing coil on a composite magnetic guide with a movable stator, an immovable core and at least one air gap, wherein at least partially the magnetic guide is formed as an insert of a magnetically hard material with a possibility of controlling a magnetic flux in the magnetic guide by its remagnetization due to supply of short duration current pulses having different polarities into the winding of the magnetizing coil, **characterized in that** the magnetic guide is formed with the possibility of closing the magnetic flux with minimization of air gap due to reciprocating turning displacement of the core along an arc and includes a housing formed as a disc on which at least one magnetic system is placed and has a shape of the segment, preferably circular segment, in which a passage-slot is provided with coaxially located side walls arranged in a plane along an arc, preferably a circle, a magnetizing coil is located in the housing, and the core is located in the passage-slot and formed as a rod with a top and a return spring which has a shape of the slot with the possibility of a reciprocating displacement in it, wherein the insert of a magnetically hard material is located on the bottom of the passage-slot and fixed to its wall perpendicularly to the direction of displacement of the core and limiting its displacement.

22. Electromagnet of an electromagnetic drive of an executingdevice formed as at least one magnetizing coil on a composite magnetic guide with a movable stator, an immovable core and at least one air gap, wherein at least partially the magnetic guide is formed as an insert of a magnetically hard material with the possibility of controlling a magnetic flux in the magnetic guide by remagnetization of the magnetic guide due to supply of two short duration pulses of different polarities into the winding of the magnetizing coil, **characterized in that** the magnetic guide is formed with the possibility of closing of a magnetic flux with minimization of an air gap due to the reciprocating linear displacement of the core relative to the stator, the stator is formed as a cup provided with at least one rod, whose part is composed of a magnetically hard material, and which has one end connected to a bottom of the cup and another free end formed in one plane with an end of a cylinder, wherein at least one of the magnetizing coils embraces the rod, and a core is located outside of the cup and formed as a plate with the possibility of closing of the magnetic circuit with minimization of the air gap due to the displacement of the core relative to the stator.

23. Electromagnet of claim 22, **characterized in that** as the core, structural elements of metal scrap and/or load are used.

24. Electromagnet of claim 22, wherein the magnetic guide is formed with the possibility of closing of the magnetic flux with minimization of air gap due to rotary displacement of the core relative to the stator, the core is formed as a plate with the possibility of closing of the cup with a cover, formation of a volume-closed magnetically conductive construction "cup-cover" and with the possibility of changing a moment of friction force between the core and the stator.

25. Electromagnet of an electromagnetic drive of an executing device formed as at least one magnetizing coil of a composite magnetic guide with a movable stator, a movable core and at least one air gap, wherein at least partially magnetically guide is composed of an insert of a magnetically hard material with the possibility of controlling a magnetic flux in the magnetic guide by a remagnetization of the magnetic guide by supply of two short duration current pulses of different polarities into the winding of the magnetizing coil, **characterized in that** the magnetic guide is formed with the possibility of closing of the magnetic flux with minimization of air gap due to linear and/or rotary displacement of the core relative to the stator, wherein the stator of the magnetic guide is formed as a cup with a magnetizing coil coaxially located in its inner cavity, and with a bottom composed of a magnetically hard material, while the core is formed as a cover of the cup connected to an end of the rod which is coaxially located in the inner cavity of the winding, wherein the magnetic guide is formed with a possibility of closing of the cup with the cover with a simultaneous touching of the free end of the rod with the bottom of the cup, and formation of a volume-closed magnetically conductive construction "cup-cover-rod-cup bottom" and a possibility of changing a moment of friction force between the core and the stator.

26. Electromagnet of claim 25, **characterized in that** the cup bottom is composed of a magnetically hard material with a layer of a magnetically soft material and an outer side of the cup with the possibility of increasing an area of cross-section of the cup bottom perpendicularly to the direction of the magnetic flux.

27. Electromagnet of claim 25, **characterized in that** the cup bottom is partially formed as an insert of a magnetically soft material.

28. Electromagnet of claim 25, **characterized in that** at least partially the walls of the cup are formed as an insert of a magnetically hard material.

**Fig. 1**

**Fig. 2**

Fig. 3

Table 1

| Ferromagnetics | Residual induction B, Tl | Coercitive force Hc, k A/m | Maximum induction Bmax at H=50 k A/m |
|---|---|---|---|
| Magnetically hard (4) | | | |
| UND8 | 0, 6 | 44 | |
| UNDK15 | 0,75 | 48 | |
| UNDK18C | 1,10 | 44 | 1,0-1,5 |
| UN13DK24 | 1,25 | 40 | |
| UN13DK25 | 1,40 | 44 | |
| UN14DK25 | 1,35 | 52 | |
| Magnetically Soft (5) | | | |
| 1211 | | | 2,2 |
| 1311 | | | 2,1 |
| 1411 | <0,1 | <0,5 | 2,1 |
| 1511 | | | 2,0 |

**Fig. 4**

A-A

Fig. 5

Fig. 6

**Fig. 7**

**Fig. 8**

**Б-Б**

**Fig. 9**

**А-А**

**Fig. 10**

**Fig. 11**

**A-A**

**Fig. 12**

**Fig. 13**

**Fig. 14**

Fig. 15

**Fig. 16**

Fig. 17

Fig. 18

Fig. 19

Fig. 20

Fig. 21

Table 2

| Important features and properties | Claimed solution | Analog 1 | Analog 2 | Analog 3 |
|---|---|---|---|---|
| 1. Minimization of air gap | + | - | - | + |
| 2. Presence of closed magnetic circuit | + | - | - | + |
| 3. Presence of composite magnetic guide | + | - | + | + |
| 4. Absence of parallel branches (areas) of magnetic circuit, so that magnetic flux completely is transmitted through magnetically hard insert | + | - | - | + |
| 5. α=0 and cosα=1 | + | - | - | + |
| 6. Use of magnetically hard materials with minimal energy for remagntetization | + | - | - | + |
| 7. Retaining "magnetic memory". | + | - | - | + |
| 8. Ability to operate in circuits of alternating and direct current. | + | + | + | + |
| 9. Present at least two stable energy independent conditions of magnetic guide of electromagnet | + | - | - | + |
| 10. Possibility to make magnetic guide from inexpensive easy-to-machine non-alloyed steel of the type ST3, ST10, ST20, etc. | + | - | - | + |

33

| | | | |
|---|---|---|---|
| 11. Significant, (by one order) increase of attractive and/or holding force F of electromagnet. | + | - | - | - |
| 12. Significant (several times) reduction of metal consumption. | + | + | - | + |
| 13. Significant improvement of mass-size parameters. | + | + | - | + |
| 14. Increase of speed of action of magnetic systems. | + | + | - | + |
| 15. Reduction of riveting of metal elements of magnetic guide and increase of wear resistance. | + | - | - | + |
| 16. Significant increase of service life of contacts of executing devices. | + | - | - | + |
| 17. Significant increase of holding force when compared with open non-composite magnetic guide. | + | - | - | - |
| 18. Significant expansion of functional possibilities of electromagnet. | + | - | - | + |
| 19. Significant economy of energy expenses. | + | + | + | + |

Fig. 22

Table 3

| BRAND | Magnetic induction, B | | Voltage, $H_{ce}$ | | $(BH)_{max}$ | | $T_{work}$ | Ratio B/H in point $(BH)_{max} \, 10^{-3}$ |
|---|---|---|---|---|---|---|---|---|
| | MT1 | Gs | kA/m | $O_e$ | $kJ/m^3$ | $mGO_e$ | 0°C | $T1 \cdot m \cdot kA^{-1}$ |
| LNG13 | 700 | 7000 | 48 | 600 | 12.7 | 1.6 | 540 | 14.6 |
| LNG37 | 1200 | 12000 | 48 | 600 | 36.9 | 4.6 | 540 | 25.0 |
| LNG40 | 1250 | 12500 | 48 | 600 | 39.8 | 5.0 | 540 | 26.0 |
| LNG44 | 1250 | 12500 | 52 | 650 | 43.8 | 5.5 | 540 | 24.0 |
| LNG52 | 1300 | 13000 | 56 | 700 | 51.7 | 6.5 | 540 | 23.2 |
| LNGT28 | 1000 | 10000 | 56 | 720 | 27.9 | 3.5 | 540 | 17.9 |
| LNGT38 | 800 | 8000 | 110 | 1380 | 37.8 | 4.7 | 540 | 7.3 |
| LNGT60 | 900 | 9000 | 110 | 1380 | 59.7 | 7.5 | 540 | 8.2 |
| LNGT72 | 1050 | 10500 | 111 | 1400 | 71.6 | 9.0 | 540 | 9.5 |
| LNGT36J | 700 | 7000 | 139 | 1750 | 35.8 | 4.5 | 540 | 5.0 |

**Fig. 23**

Table 4

| Brand | Magnetic induction, B | | Voltage, $H_{CB}$ | | $(BH)_{max}$ | | $T_{work}$ | Ratio B/H in point $(BH)_{max}$·$10^{-3}$ |
|---|---|---|---|---|---|---|---|---|
| | MT1 | Gs | k A/m | $O_e$ | kJ/m³ | MGO$_e$ | 0°C | Tkm·kA$^{-1}$ |
| FLNG12 | 700 | 7000 | 40 | 500 | 11.9 | 1.5 | 540 | 17.5 |
| FLNG14 | 500 | 5000 | 60 | 750 | 14.3 | 1.8 | 540 | 8.3 |
| FLNG28 | 1050 | 10500 | 46 | 580 | 27.9 | 3.5 | 540 | 22.8 |
| FLNG34 | 1120 | 11200 | 47 | 595 | 34.2 | 4.3 | 540 | 23.8 |
| FLNG26 | 900 | 9000 | 56 | 700 | 26.3 | 3.3 | 540 | 16.1 |
| FLNGT18 | 650 | 6500 | 80 | 1000 | 18.3 | 2.3 | 540 | 8.1 |
| FLNGT31 | 780 | 7800 | 107 | 1340 | 31.0 | 3.9 | 540 | 7.3 |
| FLNGT36 | 680 | 6800 | 135 | 135 | 35.8 | 4.5 | 540 | 5.0 |
| FLNGT38 | 800 | 8000 | 123 | 123 | 38.2 | 4.8 | 540 | 6.5 |

**Fig. 24**

36

Table 5

| Brand | Ratio B/H in point $(BH)_{max}$ $\cdot 10^{-3}$, T1$\cdot$m$\cdot$kA$^{-1}$ |
|---|---|
| UND4 | 12.0-16.0 |
| UND8 | 13.0-16.0 |
| UNTS | 7.0-10.0 |
| UNDK15 | 15.5-18.0 |
| UNDK18 | 15.0-20.0 |
| UNDK18C | 22.0-28.0 |
| UN13DK24C | 30.0-33.0 |
| UN13DK24 | 25.0-27.5 |
| UN14DK24 | 20.0-22.0 |
| UN15DK24 | 15.0-17.5 |
| UN13DK25A | 27.5-30.0 |
| UN14DK25A | 24.0-25.0 |
| UN13DK25BA | 26.5-27.5 |
| UN14DK25BA | 21.5-24.0 |
| UN15DK25BA | 16.5-21.5 |
| UNDK34T5 | 8.0-11.0 |
| UNDK35T5B | 8.0-10.0 |
| UNDK35T5 | 7.0-8.0 |
| UNDK35T5BA | 8.0-9.0 |
| UNDK35T5AA | 8.0-9.0 |
| UNDK38T7 | 4.5-5.5 |
| UNDK40T8 | 3.5-4.5 |
| UNDK40T8AA | 4.0-5.0 |

Fig. 25

## INTERNATIONAL SEARCH REPORT

International application No.
PCT/UA 02/00068

A.    CLASSIFICATION OF SUBJECT MATTER   H01F 7/08, 7/122, 7/14, 7/16

According to International Patent Classification (IPC) or to both national classification and IPC МПК-7:

B.    FIELDS SEARCHED

Minimum documentation searched (classification system followed by classification symbols) МПК-7:

H01F 7/00, 7/06-7/11, 7/121-7/124, 7/13-7/17

Documentation searched other than minimum documentation to the extent that such documents are included in the fields searched

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
|---|---|---|
| X<br>Y<br>A | WO 00/48207 A2 (BABICH NIKOLAI SERGEEVICH) 17 August 2000,<br>Page 13, lines 1-23, page 17, lines 3-23, page 23, lines 4-14, figure 2 page 18,<br>lines 20-31, figure 5 | 1-3, 5-6, 22<br>13-19, 23<br>4, 7-12, 20-21, 24-28 |
| Y | V. S. KALINKIN et al. Podiemnye elektromagnity. Moscow, Gos. Nauchno-tekhnicheskoe izdatelstvo literatury po chernoi I tsvetnoi metallurgii, 1962, pages 5-7, figure 1 | 23 |
| Y | US 6057750 A (CHIH-SHENG SHENG) May 2, 2000 | 13-19 |
| Y | US 4502031 A (MITSUBISHI DENKI KABUSHIKI KAISHA) Feb. 26, 1985, column 1, lines 20-39 | 14 |
| Y | SU 1390647 A1 (TOLIYATTINSKY POLITEKHNICHESKY INSTITUT) 23.04.1988 | 18-19 |
| A | DE 19906445 A1 (SCHUSTER, HEINZ-PETER) 31. 8.2000 | 21 |

☐  Further documents are listed in the continuation of Box C.          ☐  See patent family annex.

| | |
|---|---|
| *        Special categories of cited documents:<br>"A"   document defining the general state of the art which is not considered<br>      to be of particular relevance<br>"E"   earlier document but published on or after the international filing date<br>"L"   document which may throw doubts on priority claim(s) or which is<br>      cited to establish the publication date of another citation or other<br>      special reason (as specified)<br>"O"   document referring to an oral disclosure, use, exhibition or other<br>      means<br>"P"   document published prior to the international filing date but later than<br>      the priority date claimed | "T"   later document published after the international filing date or priority<br>      date and not in conflict with the application but cited to understand<br>      the principle or theory underlying the invention<br>"X"   document of particular relevance; the claimed invention cannot be<br>      considered novel or cannot be considered to involve an inventive<br>      step when the document is taken alone<br>"Y"   document of particular relevance; the claimed invention cannot be<br>      considered to involve an inventive step when the document is<br>      combined with one or more other such documents, such combination<br>      being obvious to a person skilled in the art<br>"&"   document member of the same patent family |

| Date of the actual completion of the international search | Date of mailing of the international search report |
|---|---|
| **18 April 2003 (18.04.2003)** | **7 May 2003 (07.05.2003)** |

| Name and mailing address of the ISA/  **RU** | Authorized officer |
|---|---|
| Facsimile No. | Telephone No. |

Form PCT/ISA/210 (second sheet) (July 1992)